(19) Europäisches Patentamt
European Patent Office
Office européen des brevets

(11) **EP 2 136 523 B1**

(12) **EUROPÄISCHE PATENTSCHRIFT**

(45) Veröffentlichungstag und Bekanntmachung des Hinweises auf die Patenterteilung:
**20.12.2017 Patentblatt 2017/51**

(51) Int Cl.:
*H04L 27/26* (2006.01)     *H04L 1/00* (2006.01)

(21) Anmeldenummer: **09007118.4**

(22) Anmeldetag: **28.05.2009**

(54) **VERFAHREN UND VORRICHTUNGEN ZUM SENDEN UND EMPFANGEN EINES DATENSTROMS IN EINEM MEHRTRÄGER-ÜBERTRAGUNGSSYSTEM**

METHODS AND DEVICES FOR TRANSMITTING AND RECEIVING A DATA FLOW IN A MULTIPLE HOLDER TRANSMISSION SYSTEM

PROCÉDÉS ET DISPOSITIFS D'ENVOI ET DE RÉCEPTION D'UN FLUX DE DONNÉES DANS UN SYSTÈME DE TRANSMISSION À PLUSIEURS PORTEURS

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **18.06.2008 DE 102008028924**

(43) Veröffentlichungstag der Anmeldung:
**23.12.2009 Patentblatt 2009/52**

(73) Patentinhaber: **Rohde & Schwarz GmbH & Co. KG 81671 München (DE)**

(72) Erfinder: **Schaefer, Andrew, Dr. D-81377 München (DE)**

(74) Vertreter: **Körfer, Thomas et al Mitscherlich PartmbB Patent- und Rechtsanwälte Postfach 33 06 09 80066 München (DE)**

(56) Entgegenhaltungen:
**US-A1- 2001 050 926     US-A1- 2005 163 235 US-B1- 6 445 693**

**Beschreibung**

Die Erfindung betrifft ein Verfahren und eine Vorrichtung zum Senden und Empfangen eines Datenstroms in einem Mehrträger-Übertragungssystem.

In heutigen Übertragungssystemen werden typischerweise Einzelträgerverfahren mit einem einzigen Subträger - beispielsweise Übertragungssignale in einem QAM-, PSK-, CPM- oder FSK-moduliertem Übertragungssystem - oder Multiträgerverfahren mit vielen Subträgern - bevorzugt Übertragungssignale in einem OFDM-Übertragungssystem - verwendet. Zum technologischen Hintergrund sei beispielspielsweise auf die WO98/43373 A1 verwiesen.

Die Einzelträgerverfahren finden hauptsächlich bei Übertragungssystemen mit vergleichsweise geringen Datenübertragungsvolumen bei geringer bis durchschnittlicher Symbolrate bzw. Bandbreite Anwendung, da mit zunehmender Symbolrate bzw. Bandbreite in einem digitalen Übertragungssystem ein höheres Maß an Intersymbol-Interferenzen auftritt und somit ein aufwendigeres Entzerren des Empfangssignals notwendig ist, das aus Kosten- und/oder Machbarkeitsgründen nicht weiterverfolgt wird.

Bei Mehrträgerverfahren wird die zu übertragende Information auf mehrere Subträger verteilt. Gegenüber einem Einzelträgerverfahren reduziert sich die Bandbreite pro Subträger, während sich die Symboldauer vergrößert. Die Vergrößerung der Symboldauer bedingt geringere Intersymbol-Interferenzen und damit eine einfachere Realisierung der Signalentzerrung. Das als Mehrträgerverfahren typischerweise eingesetzte OFDM-Verfahren verwendet in der Basisbandsignalverarbeitung der Sender und Empfänger Fast-Fourier-Transformations- bzw. inverse Fast-Fourier-Transformations-Einheiten, die rechteckförmige und damit zeitbegrenzte Impulsantworten im Zeitbereich und somit dazu korrespondierende nichtbandbegrenzte Subträger mit einer Flanke im Spektralbereich erzeugen. Die für den Subträger benötigte Bandbreite ist somit gegenüber der für die Datenübertragung im Subträger genutzten Bandbreite vergrößert. Um diese Bandbreitenineffizienz möglichst gering zu halten, werden in OFDM-Übertragungssystemen möglichst viele Subträger innerhalb der gesamten Systembandbreite - beispielsweise beim OFDM-Verfahren nach dem WiMAX-Standard 128, 512, 1024 oder 2056 Subträger - verwendet. Somit eignet sich das OFDM-Verfahren hauptsächlich für die Übertragung von vergleichsweise hohem Datenübertragungsvolumen.

Für die Übertragung eines mittelgroßen Datenübertragungsvolumens bietet sich ein Mehrträgerverfahren mit einer skalierbaren mittelgroßen Anzahl von Subträgern - zwischen einem und 128 Subträgern - an.

Die Skalierbarkeit des Übertragungssystems setzt eine entsprechende Skalierbarkeit bei den einzelnen Teilnehmern - Sendern und Empfängern - des Übertragungssystems voraus. Ist die Skalierbarkeit bei einigen Teilnehmern aufgrund von begrenzter Signalverarbeitungskapazität beschränkt, so können diese Teilnehmer am Datenverkehr eines derartigen Übertragungssystems nicht einmal einen ihren Signalverarbeitungsressourcen entsprechenden Anteil am Gesamtübertragungsvolumen empfangen und scheiden deshalb am Datenverkehr des Übertragungssystems aus.

Die US 2001/050926 A1 offenbart ein Verfahren und eine Vorrichtung zur Übertragung eines Datenstroms in mehreren Trägern und weist die hierzu erforderlichen Signalverarbeitungsfunktionen des Kodierens, Verschachtelns, Modulierens und Zusammenfügens auf.

Über die Auslegung der Koderate des ECC-Kodierers geht aus dieser Druckschrift lediglich hervor, dass die Länge der kodierten Nachricht in Bits um die realisierte Redundanz größer als die Länge der Quell-Nachricht ist. Zusätzlich geht aus der Beschreibung hervor, dass der ECC-Encoder ein sogenanntes EEP (=Equal-Error-Protection) realisiert, d.h. die Datenbits des ursprünglichen Datenstroms mit derselben Redundanz im kodierten Datenstrom ausgestattet sind und somit die Koderate über dem gesamten Datenstrom konstant ist. Eine Auslegung der Koderate an der Anzahl der Subträgersignale geht aus dieser Druckschrift nicht hervor.

Aufgabe der Erfindung ist es deshalb, ein Übertragungssystem, insbesondere auch für Funkübertragung, zu schaffen, in dem Teilnehmer mit beschränkten Signalverarbeitungsressourcen zumindest einen ihren begrenzten Signalverarbeitungsressourcen entsprechenden Anteil am Gesamtübertragungsvolumen empfangen können.

Die Aufgabe wird durch ein Verfahren zum Senden eines Datenstroms in einem Mehrträger-Übertragungssignal mit den Merkmalen des Anspruchs 1, durch ein Verfahren zum Empfangen eines in einem Mehrträger-Übertragungssignal übertragenen Datenstroms mit den Merkmalen des Anspruchs 5, durch eine Vorrichtung zum Senden eines Datenstroms in einem Mehrträger-Übertragungssignal mit den Merkmalen des Anspruchs 9 und durch eine Vorrichtung zum Empfangen eines in einem Mehrträger-Übertragungssignal übertragenen Datenstroms mit den Merkmalen des Anspruchs 11 gelöst.

Erfindungsgemäß wird beim Verfahren und bei der Vorrichtung zum Senden eines in einem Mehrträger-Übertragungssignal übertragenen Datenstroms ein Kodieren des Datenstrom mit einer Koderate $R$, die kleiner oder gleich der inversen kleinsten Anzahl $\dfrac{1}{P}$ von in allen Empfängern jeweils verarbeitbaren Subträgern des Multiträger-Übertragungssignals ist, und ein anschließendes Verschachteln von Dateneinheiten aus einem oder mehreren Kodeworten des kodierten Datenstroms durchgeführt. Auf diese Weise wird der in jedem Datenwort oder in jeder Folge von Datenworten des unkodierten Datenstroms enthaltene Informationsgehalt um den Faktor $\dfrac{1}{R}$ im korrespondierenden Kodewort oder in der korrespondierenden Folge von Kodeworten dubliziert.

Durch das Verschachteln von ersten Dateneinheiten im kodierten Datenstrom wird erreicht, dass unabhängig vom verwendeten Kode bzw. Kodetyp - beispielsweise Blockkode, Faltungskode, iterativer Kode usw. - und unabhängig vom Verschachtler-Typ - z.B. Block-Interleaver oder Faltungsinterleaver - der Informationsgehalt, der in jedem der beim einzelnen Verschachtelungsvorgang jeweils benutzten Kodeworte jeweils enthaltene Informationsgehalt auf alle durch den einzelnen Verschachtelungsvorgang jeweils entstandenen verschachtelten Kodeworte des verschachtelten Datenstroms jeweils übertragen wird.

Über einen inversen Multiplexer werden die einzelnen verschachtelten Kodeworte des verschachtelten Datenstroms auf eine der Anzahl von Subträgern des Mehrträger-Übertragungssignals entsprechenden Anzahl von Sendedatenkanälen sukzessive verteilt, in denen jeweils ein Modulator zum Modulieren des dem jeweiligen Sendedatenkanal zugewiesenen Teildatenstroms auf einen zugehörigen Subträger des Mehrträger-Übertragungssignals geschaltet ist.

Die jedem Sendedatenkanal durch inverses Multiplexen des verschachtelten Datenstroms jeweils zugewiesene Anzahl von verschachtelten Kodeworten multipliziert mit der Länge des einzelnen verschachtelten Kodewortes entspricht der Anzahl von beim Verschachteln des Datenstroms von Kodeworten jeweils benutzten Kodeworte, so dass der Informationsgehalt jedes bei einem Verschachtelungsvorgang jeweils benutzten unverschachtelten Kodewortes in den jedem Sendedatenkanal jeweils zugewiesenen verschachtelten Kodeworten enthalten ist und damit in jeden Sendedatenkanal der identische Informationsgehalt aus dem unkodierten Datenstrom transferiert wird.

Da die Koderate $R$ als das Verhältnis $\dfrac{k}{n}$ der Informations-Dateneinheiten $k$ eines Kodewortes zu den Gesamt-Dateneinheiten $n$ eines Kodewortes - Informations-Dateneinheiten $k$ eines Kodewortes und redundante Dateneinheiten $n$-$k$ eines Kodewortes - definiert ist und erfindungsgemäß kleiner oder gleich der inversen kleinsten Anzahl $\dfrac{1}{P}$ von in jedem Empfänger jeweils verarbeitbaren Subträgern des Mehrträger-Übertragungssystem ausgelegt ist, weist jedes Kodewort des kodierten Datenstroms mindestens soviel Redundanz auf, dass über jeden Sendedatenkanal jedem Subträger des Mehrträger-Übertragungssignals von jedem Kodewort des kodierten Datenstroms jeweils dieser Informationsgehalt zugewiesen wird.

Beim erfindungsgemäßen Verfahren und bei der erfindungsgemäßen Vorrichtung zum Empfangen eines in einem Mehrträger-Übertragungssignal übertragenen Datenstroms ist eine der vorhandenen Signalverarbeitungskapazität des Empfängers entsprechende Anzahl von Empfangsdatenkanälen vorgesehen, die jeweils einen Demodulator zum Demodulieren des empfangenen Mehrträger-Übertragungssignals in den im jeweiligen Subträger des Mehrträger-Übertragungssignals übertragenen Datenstrom und einen Entzerrer zum Entzerren des im jeweiligen Empfangsdatenkanal demodulierten Datenstroms aufweisen.

Die in den einzelnen Empfangsdatenkanälen demodulierten und entzerrten Datenströme mit verschachtelten Kodeworten werden einem gemeinsamen Entschachtler zum Entschachteln der einzelnen verschachtelten Kodeworte des demodulierten und entzerrten Datenstroms zugeführt.

Ein dem Entschachtler nachgeschalteter Dekodierer hat selbst bei Vorliegen nur eines einzigen Empfangsdatenkanals für jedes zu transferierende Kodewort des zu übertragenden Datenstroms jeweils eine einzige "Kopie" des in einem einzigen Subträger des Mehrträger-Übertragungssignals übertragenen und durch die Übertragung verzerrten Informationsgehalts zur Verfügung, um daraus den für eine Mindestkommunikation zwischen Sender und Empfänger erforderlichen Informationsgehalt der einzelnen Kodeworte des zu übertragenen Datenstroms zu schätzen. Weist der Empfänger mehrere Empfangsdatenkanäle auf, so ist der Dekodierer in der Lage, den in jedem Kodewort des Datenstroms jeweils enthaltenen Informationsgehalt verbessert zu ermitteln und damit eine optimierte Kommunikation zwischen Sender und Empfänger zu ermöglichen. Im Fall einer der Anzahl von Subträgern des Mehrträger-Übertragungssignals entsprechenden Anzahl von Empfangsdatenkanälen kann der Dekodierer den in jedem Kodewort des Datenstroms enthaltenen Informationsgehalt optimal ermitteln und somit eine optimale Kommunikation zwischen Sender und Empfänger ermöglichen.

Der in jedem Sendedatenkanal vorgesehene Modulator und der im zugehörigen Empfangsdatenkanal vorgesehene korrespondierende Demodulator können den jeweiligen Teildatenstrom in einem über alle Subträger identischen, in einem über mehrere Subträger identischen oder in einem subträgerspezifischen Modulations- bzw. Demodulationsverfahren modulieren bzw. demodulieren. Somit können bei Verwendung eines über mehrere Subträger identischen oder eines subträgerspezifischen Modulations- bzw. Demodulationsverfahrens Empfänger mit beschränkter Signalverarbeitungskapazität nur diejenigen Teildatenströme vom zugehörigen Subträger demodulieren, die in einem zum beim/bei den Demodulator/en des Empfängers verwendete(n) Demodulationsverfahren korrespondieren Modulationsverfahren moduliert sind.

In jedem Sendedatenkanal kann bei Anwendung einer verketteten Kodierung jeweils ein innerer Kodierer zum inneren Kodieren des auf den jeweiligen Sendedatenkanal zugewiesenen Datenstroms und in dem zum jeweiligen Sendedatenkanal korrespondierenden Empfangsdatenkanal im Anschluss an den jeweiligen Demodulator ein innerer Dekodierer zum inneren Dekodieren des jeweiligen demodulierten Datenstroms vorgesehen sein. Der in jedem Sendedatenkanal vorgesehene innere Kodierer und der im zugehörigen Empfangsdatenkanal vorgesehene korrespondierende innere Dekodierer können den jeweiligen Teildatenstrom in einem über alle Subträger identischen, in einem über mehrere Subträger identischen oder in einem subträgerspezifischen Kodierungs- bzw. Dekodierungsverfahren kodieren bzw. dekodieren. Somit können bei Verwendung eines über mehrere Subträger identischen oder eines subträgerspezifischen Kodierungs- bzw. Dekodierungsverfahren Empfänger mit beschränkter Signalverarbeitungskapazität nur diejenigen Teildatenströme vom zugehörigen Subträger dekodieren, die in einem zum beim/bei den inneren Dekodierer/n des Empfängers verwendete(n) Dekodierungsverfahren korrespondieren Kodierungsverfahren kodiert sind.

Im Empfänger kann auch eine begrenzte Anzahl von in den einzelnen Empfangsdatenkanälen jeweils demodulierten Datenströmen für eine Weiterverfolgung in den jeweiligen Entzerrern und im gemeinsamen Entschachtler und gemeinsamen Dekodierer vorgesehen sein. Hierzu ist in jedem Empfangsdatenkanal jeweils nach dem Demodulator ein Vergleicher und Schalter angeordnet. Der Vergleicher vergleicht den Signalpegel des jeweiligen demodulierten Datenstroms mit einer Bezugsgröße, beispielsweise mit einem Referenzsignalpegel. Der Schalter schaltet den jeweiligen demodulierten Datenstrom zum jeweiligen Entzerrer im Fall eines gegenüber dem Referenzsignalpegel höheren Signalpegels des jeweiligen demodulierten Datenstroms durch.

Die einzelnen Empfänger können sich darüber hinaus im Rahmen eines Abstimmungsprozesses einigen, jeweils eine identische Anzahl von Empfangsdatenkanälen zum jeweiligen Demodulieren und Entzerren des im jeweiligen Subträger des Mehrträger-Übertragungssignals übertragenen Datenstroms zu verwenden. In diesem Fall kann auch die Anzahl der Sendedatenkanäle entsprechend reduziert werden und ein reduzierter Datenkommunikations-Betrieb zwischen allen Teilnehmern des Übertragungsnetzes aufrecht erhalten werden.

Das erfindungsgemäße Verfahren zum Senden eines Datenstroms in einem Mehrträger-Übertragungssignal, das erfindungsgemäße Verfahren zum Empfangen eines in einem Mehrträger-Übertragungssignal übertragenen Datenstroms, die erfindungsgemäße Vorrichtung zum Senden eines Datenstroms in einem Mehrträger-Übertragungssignal und die erfindungsgemäße Vorrichtung zum Empfangen eines in einem Mehrträger-Übertragungssignal übertragenen Datenstroms werden im Folgenden anhand der Zeichnung im Detail erläutert. Die Figuren der Zeichnung zeigen:

Fig. 1A      ein Blockdiagramm einer ersten Ausführungsform der erfindungsgemäßen Vorrichtung zum Senden eines Datenstroms in einem Mehrträger-Übertragungssignal,

Fig. 1B      ein Blockdiagramm der ersten Ausführungsform der erfindungsgemäßen Vorrichtung zum Senden eines Datenstroms in einem Mehrträger-Übertragungssignal mit einem OFDM-Offset-QAM-Mehrträgerverfahren,

Fig. 1C      ein Blockdiagramm einer zweiten Ausführungsform der erfindungsgemäßen Vorrichtung zum Senden eines Datenstroms in einem Mehrträger-Übertragungssignal,

Fig. 2A      ein Blockdiagramm einer ersten Ausführungsform der erfindungsgemäßen Vorrichtung zum Empfangen eines in einem Mehrträger-Übertragungssignal übertragenen Datenstroms,

Fig. 2B      ein Blockdiagramm einer ersten Ausführungsform der erfindungsgemäßen Vorrichtung zum Empfangen eines in einem Mehrträger-Übertragungssignal übertragenen Datenstroms mit einem OFDM-Offset-QAM-Mehrträgerverfahren,

Fig. 2C      ein Blockdiagramm einer zweiten Ausführungsform der erfindungsgemäßen Vorrichtung zum Empfangen eines in einem Mehrträger-Übertragungssignal übertragenen Datenstroms,

Fig. 2D      ein Blockdiagramm einer dritten Ausführungsform der erfindungsgemäßen Vorrichtung zum Empfangen eines in einem Mehrträger-Übertragungssignal übertragenen Datenstroms,

Fig. 3      ein Flussdiagramm des erfindungsgemäßen Verfahrens zum Senden eines Datenstroms in einem Mehrträger-Übertragungssignal und

Fig. 4      ein Flussdiagramm des erfindungsgemäßen Verfahrens zum Empfangen eines in einem Mehrträger-Übertragungssignal übertragenen Datenstroms.

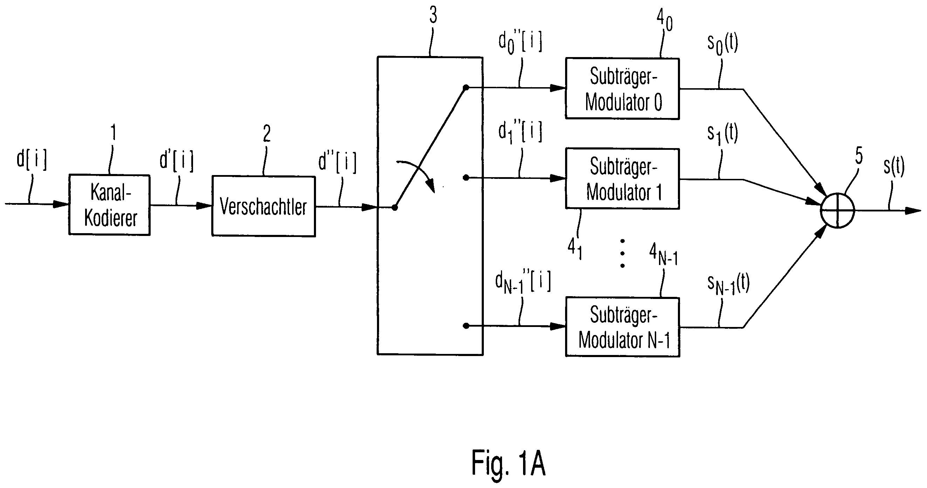

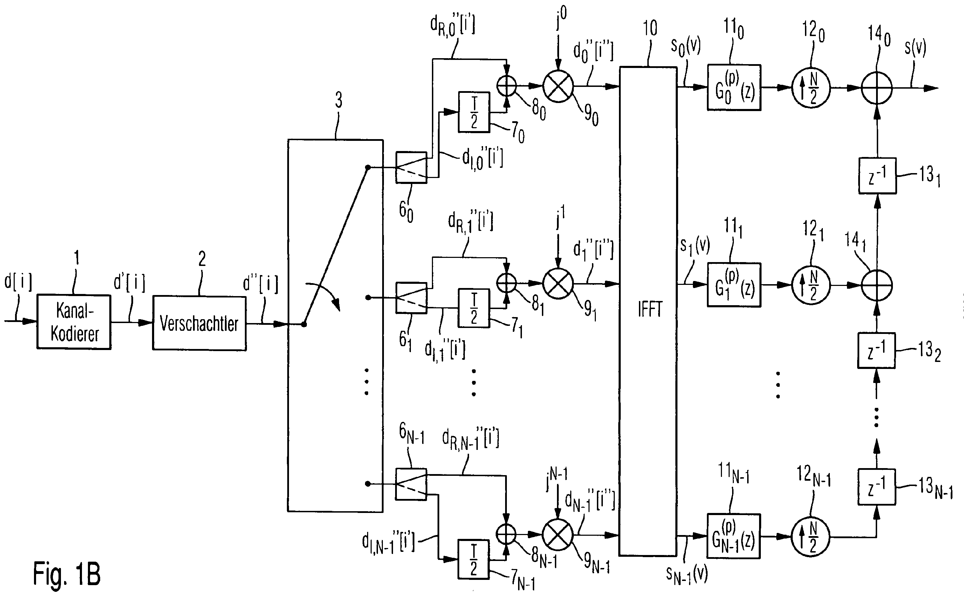

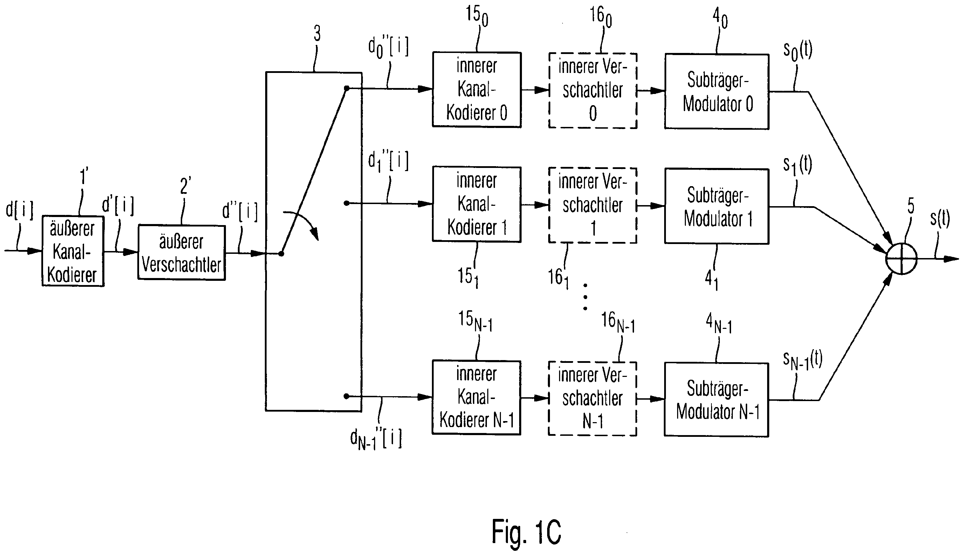

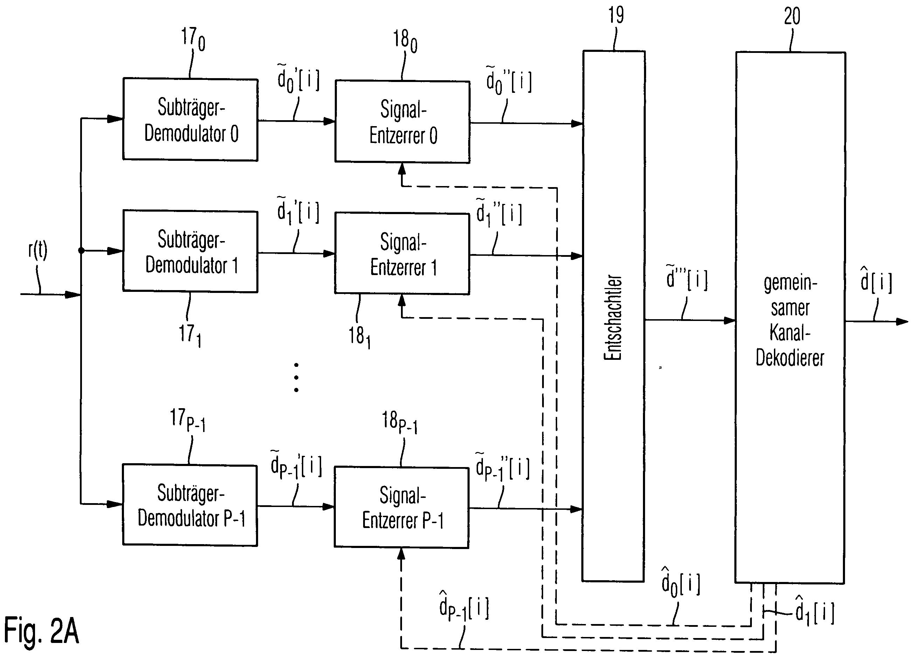

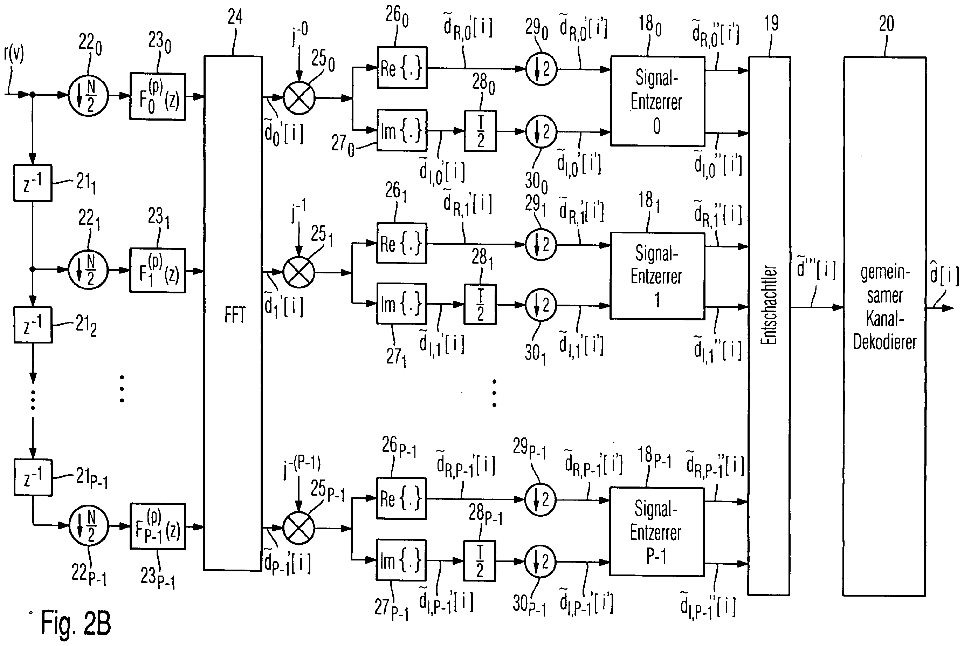

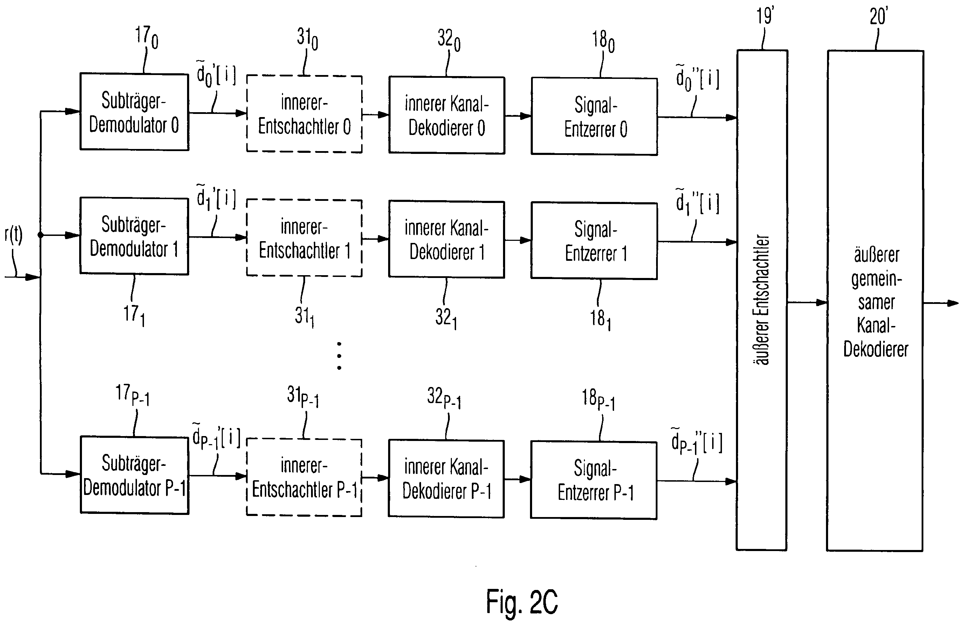

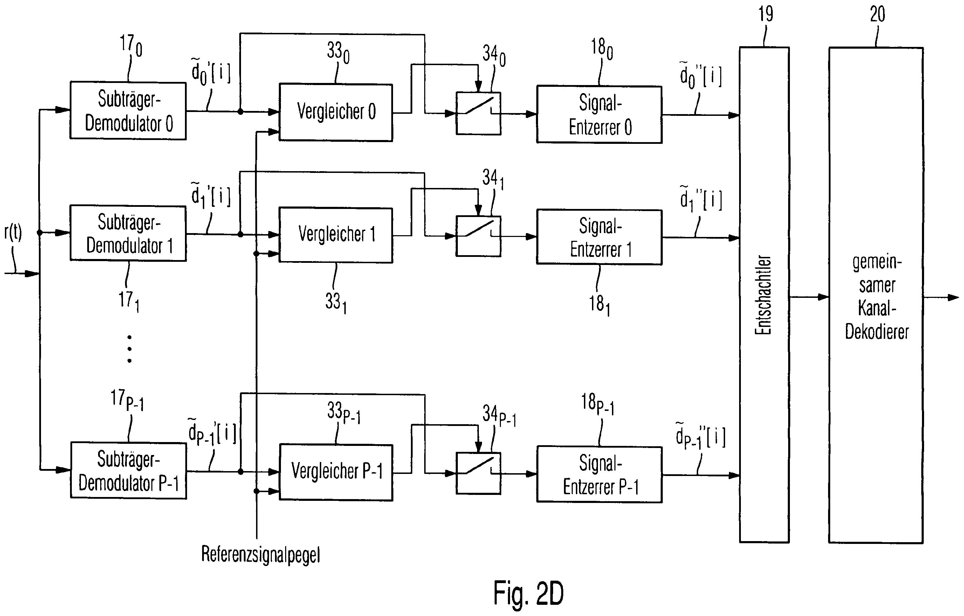

Im Folgenden werden die einzelnen Ausführungsformen der erfindungsgemäßen Vorrichtung zum Senden eines Datenstroms in einem Mehrträger-Übertragungssignal anhand der Figuren 1A, 1B und 1C und der erfindungsgemäßen Vorrichtung zum Empfangen eines in einem Mehrträger-Übertragungssignal übertragenen Datenstroms anhand der Figuren 2A, 2B, 2C und 2D erläutert.

In der ersten Ausführungsform der erfindungsgemäßen Vorrichtung zum Senden eines Datenstroms in Fig. 1A wird ein unkodierter Datenstrom $d[i]$ von Nutzdaten in einen kodierten Datenstrom $d'[i]$ mit Kodeworten in einem Kanalkodierer 1 gewandelt. Der Kanalkodierer 1 zerlegt den unkodierten Datenstrom $d[i]$ in eine Folge von Datenworten mit jeweils einer konstanten Anzahl $k$ von Nutzdaten und erzeugt eine Folge von Kodeworten mit jeweils einer konstanten Anzahl $n$ von kodierten Daten. Das Verhältnis zwischen der Anzahl $k$ von Nutzdaten jedes unkodierten Datenworts und der Anzahl $n$ von kodierten Daten jedes Kodeworts, das typischerweise kleiner als eins ist, wird durch die Koderate $R$ des Kanalkodierers 1 bestimmt.

Hierbei wird der Informationsgehalt des einzelnen Datenworts in Höhe der Anzahl $k$ von Nutzdaten eines Datenworts im Kanalkodierer 1 im Kodierungsvorgang nicht erhöht. Vielmehr werden vom Informationsgehalt eines Datenworts des unkodierten Datenstroms im Kanalkodierer 1 im zum jeweiligen Datenwort korrespondierenden Kodewort eine dem Faktors $\dfrac{1}{R}$ entsprechende Anzahl von Redundanzen - "Kopien" bzw. "Duplikate" des Informationsgehalts - erzeugt.

Als Kanalkodierer 1 kann jeder beliebige Kanalkodierer-Typ - beispielsweise Blockkodierer, Faltungskodierer, iterativer Kodierer usw. - zum Einsatz kommen, der eine bestimmte Anzahl $k$ von Nutzdaten eines unkodierten Datenstroms entsprechend seiner Koderate $R = \dfrac{k}{n}$ in eine bestimmte Anzahl $n$ von kodierten Daten eines kodierten Datenstroms überführt. Hierbei ist es unwesentlich, ob jeweils Blöcke von mehreren Datenworten des unkodierten Datenstroms im Fall eines Blockkodierers in Blöcke von mehreren Kodeworten des kodierten Datenstroms erweitert werden oder eine Folge von Datenworten des unkodierten Datenstroms entsprechend der Zustandsautomatenstruktur eines Faltungskodierers zur Erzeugung einer Folge von Kodeworten des kodierten Datenstroms miteinander verknüpft werden. Entscheidend ist vielmehr, dass der in einer bestimmten Anzahl von Datenworten des unkodierten Datenstroms enthaltene Informationsgehalt entsprechend dem Faktor $\dfrac{1}{R}$ vervielfältigt wird und die "Kopien des Informationsgehalts" in der korrespondierenden Anzahl von Kodeworten des kodierten Datenstroms enthalten sind.

In einem an den Kanalkodierer 1 anschließenden Verschachtler 2 werden Dateneinheiten des Datenstrom mit Kodeworten $d'[i]$ zur Erzeugung eines Datenstroms mit verschachtelten Kodeworten $d''[i]$ ineinander verschachtelt. Auf diese Weise wird gewährleistet, dass die "Kopien" bzw. "Duplikate" des in einer bestimmten Anzahl von Datenworten des unkodierten Datenstroms $d[i]$ enthaltenen Informationsgehalts gleichmäßig in einer korrespondierenden Anzahl von Kodeworten des kodierten Datenstroms mit verschachtelten Kodeworten $d''[i]$ enthalten sind.

Als Verschachtler-Typ des Verschachtlers 2 kann ein zum Kanalkodierer-Typ passender Verschachtler-Typ - beispielsweise Block-Interleaver in Kombination zum Blockkodierer oder Faltungs-Interleaver in Kombination zum Faltungskodierer - benutzt werden, um eine an die Kodierungsstruktur und damit an die Art der Generierung redundanten Informationsgehalts in den einzelnen Kodeworten des kodierten Datenstroms $d'[i]$ bestmöglich angepasste Verschachtelung und damit bestmögliche Verteilung des redundanten Informationsgehalts in den einzelnen Kodeworten des Datenstroms mit Kodeworten $d'[i]$ auf eine Vielzahl von verschachtelten Kodeworten des Datenstroms mit verschachtelten Kodeworten $d''[i]$ zu erzielen.

Der an den Verschachtler 2 sich anschließende inverse Multiplexer 3 verteilt die bei jeweils einem Verschachtelungsvorgang jeweils erzeugten verschachtelten Kodeworte des Datenstroms mit verschachtelten Kodeworten $d''[i]$ auf eine der Anzahl $N$ von Subträgern des Mehrträger-Übertragungssignals entsprechende Anzahl $N$ von Sendedatenkanäle $0,1,...,N-1$. Die an den Ausgängen des inversen Multiplexers 3 auf jeden der Sendedatenkanäle $0,1,...,N-1$ aus dem gesamten Datenstrom mit verschachtelten Kodeworten $d''[i]$ am Eingang des inversen Multiplexers 3 jeweils zugewiesenen Teildatenströme mit verschachtelten Kodeworten $d_0''[i],d_1''[i],...,d_{N-1}''[i]$ besitzen jeweils eine der dem einzelnen Verschachtelungsvorgang des Verschachtlers 2 zugeführte Anzahl von Kodeworten des kodierten Datenstroms $d'[i]$ entsprechende, mit der jeweiligen Länge des verschachtelten Kodewortes multiplizierte Anzahl von verschachtelten Kodeworten. Auf diese Weise wird der in jedem Kodewort des Datenstroms mit Kodeworten $d'[i]$ enthaltene Informationsgehalt auf jeden Teildatenstrom mit verschachtelten Kodeworten $d_0''[i],d_1''[i],...,d_{N-1}''[i]$ transferiert.

Die in jeden Sendedatenkanal transferierten Teildatenströme mit verschachtelten Kodeworten $d_0''[i],d_1''[i],...,d_{N-1}''[i]$ werden jeweils in einem zum jeweiligen Subträger des Mehrträger-Übertragungssignals gehörigen Modulator $4_0,4_1,...,4_{N-1}$ auf den jeweiligen Subträger $s_0(t),s_1(t),...,s_{N-1}(t)$ eines Mehrträger-Übertragungssignals moduliert. Bei den einzelnen Modulatoren $4_0,4_1,...,4_{N-1}$ kann es sich in einer ersten Untervariante der ersten Ausführungsform der erfindungsgemäßen Vorrichtung zum Senden eines Datenstroms in einem Mehrträger-Übertragungssignals um Modulatoren eines identischen Modulationsverfahren - beispielsweise Offset-QAM-Modulation in Kombination mit Orthogonal-Frequency-Division-Multiplexing(OFDM)-Mehrträger-Verfahren - oder in einer zweiten Untervariante der ersten Ausführungsform der erfindungsgemäßen Vorrichtung zum Senden eines Datenstroms in einem Mehrträger-Übertragungssignals jeweils um verschiedene zum jeweiligen Subträger oder zu einer Gruppe von Subträgern des Mehrträger-Übertragungssignal gehörige Modulationsverfahren handeln.

Die Verwendung eines subträgerspezifischen Modulationsverfahrens ermöglicht den vergleichsweise einfachen Zugriff von Empfängern mit reduzierter Signalverarbeitungskapazität einzig auf Subträger des Mehrträger-Übertragungssignals, die in einem mit dem im Demodulator des Empfängers verwendeten Demodulationsverfahren kompatiblen Modulationsverfahren moduliert sind.

In einem Addierer 5 werden die einzelnen Subträger $s_0(t), s_1(t), ..., s_{N-1}(t)$ zum Mehrträger-Übertragungssignal $s(t)$ zusammengefügt.

In Fig. 1B ist die erste Ausführungsform der erfindungsgemäßen Vorrichtung zum Senden eines Datenstroms in einem Mehrträger-Übertragungssignals eines OFDM-Mehrträgerverfahrens mit Offset-QAM-Modulation dargestellt, das eine ideale Bandbreiteneffizienz und aufgrund von Orthogonalität zwischen zeitlich aufeinander folgenden und spektral benachbarten Symbolen keine Intersymbol- und Nachbarkanal-Interferenzen aufweist.

Die den einzelnen Sendedatenkanälen $0,1,...,N$-1 durch den inversen Multiplexer 3 jeweils zugewiesenen Teildatenströme mit verschachtelten Kodeworten $d_0''[i], d_1''[i], ..., d_{N-1}''[i]$ werden über jeweils einen Verteiler $6_0, 6_1, ..., 6_{N-1}$ in jeweils einen Teildatenstrom mit verschachtelten Kodeworten $d_{R,0}''[i'], d_{R,1}''[i'], ..., d_{R,N-1}''[i']$ für den Inphase-Kanal des jeweiligen Sendedatenkanals $0,1,...,N$-1 und jeweils einen Teildatenstrom mit verschachtelten Kodeworten $d_{I,0}''[i'], d_{I,1}''[i'], ..., d_{I,N-1}''[i']$ für den Quadratur-Kanal des jeweiligen Sendedatenkanals $0,1,...,N$-1 aufgeteilt. Dabei werden bei geraden Zeitpunkten i die Teildatenströme mit verschachtelten Kodeworten $d_{R,0}''[i'], d_{R,1}''[i'], ..., d_{R,N-1}''[i']$ für den Inphase-Kanal des jeweiligen Sendedatenkanals $0,1,...,N$-1-durchgezogene Schalterlinie der Verteiler $6_0, 6_1, ..., 6_{N-1}$ - und bei ungeraden Zeitpunkten $i$ die Teildatenströme mit verschachtelten Kodeworten $d_{I,0}''[i'], d_{I,1}''[i'], ..., d_{I,N-1}''[i']$ für den Quadratur-Kanal des jeweiligen Sendedatenkanals $0,1,...,N$-1 erzeugt. Die Taktfrequenz $i'$ der Teildatendatenströme $d_{R,0}''[i'], d_{R,1}''[i'], ..., d_{R,N-1}''[i']$ für die Inphase-Kanäle und der Teildatenströme $d_{I,0}''[i'], d_{I,1}''[i'], ..., d_{I,N-1}''[i']$ für die Quadratur-Kanäle ist somit um den Faktor zwei gegenüber der Taktfrequenz der $i$ Teildatenströme mit verschachtelten Kodeworten $d_0''[i], d_1''[i], ..., d_{N-1}''[i]$ am Eingang der jeweiligen Verteiler $6_0, 6_1, ..., 6_{N-1}$ reduziert.

Die einzelnen Teildatenströme mit verschachtelten Kodeworten $d_{I,0}''[i], d_{I,1}''[i], ..., d_{I,N-1}''[i]$ im Quadratur-Kanal des jeweiligen Sendedatenkanals $0,1,...,N$-1 werden jeweils einem Verzögerer $7_0, 7_1, ..., 7_{N-1}$ zur Verzögerung des jeweiligen Teildatenstroms um die halbe Symboldauer $\dfrac{T}{2}$ zugeführt. Die jeweils um eine halbe Symboldauer verzögerten Teildatenströme mit verschachtelten Kodeworten $d_{I,0}''[i], d_{I,1}''[i], ..., d_{I,N-1}''[i]$ im Quadratur-Kanal des jeweiligen Sendedatenkanals $0,1,...,N$-1 und die unverzögerten Teildatenströme mit verschachtelten Kodeworten $d_{R,0}''[i], d_{R,1}''[i], ..., d_{R,N-1}''[i]$ im Inphase-Kanal des jeweiligen Sendedatenkanals $0,1,...,N$-1 werden in einem Addierer $8_0, 8_1, ..., 8_{N-1}$ addiert und in einem nachfolgenden Multiplizierer $9_0, 9_1, ..., 9_{N-1}$ mit jeweils einem sendekanal- bzw. subträgerspezifischen Faktor $j^0, j^1, ..., j^{N-1}$ multipliziert. Auf diese Weise wird die typische Offset-QAM-Symbol-Zuordnung (Offset-QAM-Symbol-Mapping) gemäß Gleichung (1A) und (1B) realisiert:

$$d_m''(i') = d_m''(i) = d_m(2 \cdot i) = \begin{cases} -d_{R,m}''(2 \cdot i) & m = gerade \\ j \cdot d_{R,m}''(2 \cdot i) & m = ungerade \end{cases} \quad (1A)$$

$$d_m''(i') = d_m''\left(i' + \frac{i'}{2}\right) = d_m''(2 \cdot i + 1) = \begin{cases} j \cdot d_{I,m}''(2 \cdot i) & m = gerade \\ -d_{I,m}''(2 \cdot i) & m = ungerade \end{cases} \quad (1B)$$

Die in den einzelnen Sendedatenkanälen $0,1,...,N$-1 Offset-QAM-modulierten Teildatenströme $d_0''[i''], d_1''[i''], ..., d_{N-1}''[i'']$ werden entsprechend der OFDM-Mehrträger-Übertragung mithilfe eines inversen Fast-Fourier-Transformators 10 auf die einzelnen Subträger des Mehrträger-Übertragungssignals moduliert, wobei die einzelnen Subträger die äquidistanten Frequenzen $\dfrac{m}{T}$ aufweisen.

Die an den einzelnen Ausgängen des inversen Fast-Fourier-Transformators 10 jeweils erzeugten Subträger-

signale $s_0(V),s_1(V),...,s_{N-1}(V)$ des OFDM-Offset-QAM-Mehrträger-Übertragungssignals $s(V)$ werden in den einzelnen Senderfiltern $11_0,11_1,..,11_{N-1}$ einer Filterbank, die jeweils eine Übertragungsfunktion $G_0^{(p)}(z),G_1^{(p)}(z),...,G_{N-1}^{(p)}(z)$ mit einer Wurzel-Nyquist-Flanke mit Bandgrenzen bei der positiven bzw. negativen inversen Symboldauer $\pm\dfrac{1}{T}$ aufweisen, bandbegrenzt, um eine Orthogonalität des Mehrträger-Übertragungssignals im Zeit- und Frequenzbereich und damit optimale Bandeffizienz zu erzielen.

Da jedes Subträgersignal $s_0(V),s_1(V),...,s_{N-1}(V)$ des Multiträger-Übertragungssignals $s(V)$ bedingt durch die FourierTransformation im inversen Fast-Fourier-Transformator 10 jeweils eine Abtastperiodizität in Höhe von $\Delta t = \dfrac{T}{N}$ und durch die Filterung in den einzelnen Senderfiltern $11_0,11_{11},...,11_{N-1}$ eine Bandbegrenzung in Höhe der Grenzfrequenz $f_G = \dfrac{1}{T}$ aufweist, wird die Abtastfrequenz der einzelnen bandbegrenzten Subträgersignale $s_0(V),s_1(V),...,s_{N-1}(V)$ des Multiträger-Übertragungssignals $s(V)$ zur Einhaltung des Nyquist-Kriteriums - $\Delta t \leq \dfrac{1}{2 \cdot f_G} = \dfrac{T}{2}$ - jeweils in einem Aufwärtstaster $12_0,12_1,...,12_{N-1}$ um den Up-Sampling-Faktor $\dfrac{N}{2}$ erhöht.

Schließlich erfolgt die Zusammenfügung der einzelnen Subträgersignale $s_0(V),s_1(V),...,s_{N-1}(V)$ zum Multiträger-Übertragungssignals $s(V)$ über die Addierer $14_0,14_1,...14_{N-2}$ und die Verzögerungsglieder $13_1,...,13_{N-1}$, die jeweils eine zeitkonsistente Serialisierung der einzelnen, zeitparallel an den jeweiligen Ausgängen des inversen Fast-Fourier-Transformators 10 erzeugten Subträgersignale $s_0(V),s_1(V),...,s_{N-1}(V)$ bewirken.

In Fig. ist eine zweite Ausführungsform der erfindungsgemäßen Vorrichtung zum Senden eines Datenstroms in einem Mehrträger-Übertragungssignal dargestellt. Zur ersten Ausführungsform identische Merkmale erhalten dieselben Bezugszeichen und werden im Einzelnen nicht mehr erläutert.

In Abgrenzung zur ersten Ausführungsform der erfindungsgemäßen Vorrichtung zum Senden eines Datenstroms in einem Mehrträger-Übertragungssignal erfolgt die Kanalkodierung in zwei Stufen. Der äußere Kanalkodierer 1' der zweiten Ausführungsform entspricht dem Kanalkodierer 1 der ersten Ausführungsform. Analog entspricht der äußere Verschachtler 2' der zweiten Ausführungsform dem Verschachtler 2 der ersten Ausführungsform.

Zusätzlich weist die zweite Ausführungsform in jedem Sendedatenkanal $0,1,...,N$-1 jeweils einen inneren Kanalkodierer $15_0,15_1,15_{N-1}$ auf.

Das in jedem inneren Kanalkodierer $15_0,15_1,...,15_{N-1}$ jeweils verwendete Kanalkodierungsverfahren ist in einer ersten Untervariante der zweiten Ausführungsform jeweils identisch, aber unterschiedlich zum Kanalkodierungsverfahren des äußeren Kanalkodierers 1'. Die Erweiterung der Kanalkodierung zu einer verketteten Kanalkodierung mit äußeren und inneren Kanalkodierer ermöglicht die Kombination unterschiedlicher Kanalkodierungstypen mit ihren spezifischen Vorteilen, die sich gegenseitig ergänzen und eine gegenüber einer einfachen Kanalkodierung optimierte Kodierungs-Performance insbesondere bei hohen Übertragungsanforderungen - beispielsweise ad-hoc-Übertragungsnetze im militärischen Bereich - gewährleisten.

In einer zweiten Untervariante der zweiten Ausführungsform, die für den Anwendungsfall unterschiedlicher Signalverarbeitungskapazitäten der einzelnen empfangenden Teilnehmer wesentlicher ist, arbeiten die in jedem einzelnen Sendedatenkanal $0,1,...,N$-1 positionierten Kanalkodierer $15_0,15_1,...,15_{N-1}$ jeweils nach einem subträgerspezifischen Kanalkodierungsverfahren oder weisen Gruppen von in jeweils einem Sendedatenkanal $0,1,...,N$-1 positionierten Kanalkodierern $15_0,15_1,...,15_{N-1}$ jeweils ein identisches Kanalkodierungsverfahren auf. Auf diese Weise ist es wie bei der in der ersten Ausführungsform vorgestellten Verwendung eines subträgerspezifischen oder subträgergruppenspezifischen Modulationsverfahrens möglich, dass Empfänger mit reduzierter Signalverarbeitungskapazität vergleichsweise einfach einzig auf Subträger des Mehrträger-Übertragungssignals zugreifen, die in einem Kodierungsverfahren kodiert sind, das zum beim inneren Kanaldekodierer des Empfängers verwendeten Dekodierungsverfahren kompatibel ist.

Natürlich ist die Kombination einer subträgerspezifischen oder subträgergruppenspezifischen Modulationsverfahren in jedem einzelnen Modulator des jeweiligen Sendedatenkanals der zweiten Untervariante der ersten Ausführungsform mit eineM subträgerspezifischen oder subträgergruppenspezifischen Kanalkodierungsverfahren in jedem einzelnen Kanalkodierer des jeweiligen Sendedatenkanal der zweiten Untervariante der zweiten Ausführungsform von der Erfindung mit abgedeckt.

Optional kann jeder Sendedatenkanal $0,1,...,N$-1 im Anschluss an den jeweiligen inneren Kanalkodierer $15_0,15_1,...,15_{N-1}$ jeweils einen inneren Verschachtler $16_0,16_1,...,16_{N-1}$ aufweisen, die gegenüber dem äußeren Verschachtler 2' jeweils zusätzliche Verteilungen des zueinander redundanten Informationsgehalts in den einzelnen verschachtelten Kodeworten der einzelnen Teildatenströme mit verschachtelten Kodeworten $d_0''[i], d_1''[i],..., d_{N-1}''[i]$ verwirklichen.

In der ersten Ausführungsform der erfindungsgemäßen Vorrichtung zum Empfangen eines in einem Mehrträger-Übertragungssignal übertragenen Datenstroms gemäß Fig. 2A, die zur ersten Ausführungsform der erfindungsgemäßen Vorrichtung zum Senden eines Datenstroms in einem Mehrträger-Übertragungssignal gemäß Fig. 1A korrespondiert, werden die einzelnen Datenströme $\tilde{d}_0'[i], \tilde{d}_1'[i],..., \tilde{d}_{P-1}'[i]$, die in den empfangenen Subträgersignalen $r_0(t), r_1(t),..., r_{P-1}(t)$ des empfangenen Mehrträger-Übertragungssignals $r(t)$ übertragen und vom Übertragungskanal verzerrt werden, in jeweils einem Demodulator $17_0, 17_1,..., 17_{P-1}$, der jeweils in einem der insgesamt $P$ Empfangsdatenkanäle $0,1,...,P-1$ positioniert ist, vom jeweiligen Subträger demoduliert.

Die Anzahl $P$ der Empfangsdatenkanäle $0,1,...,P-1$ und damit der Demodulatoren $17_0, 17_1,..., 17_{P-1}$ in einem Empfänger richtet sich nach der im Empfänger vorhandenen Signalverarbeitungskapazität. Im Fall einer ausreichenden Signalverarbeitungskapazität entspricht die Anzahl $P$ der Empfangsdatenkanäle $0,1,...,P-1$ der Anzahl $N$ von Subträgern des Mehrträger-Übertragungssignals und somit der Anzahl $N$ von Sendedatenkanälen $0,1,...,N-1$. Bei reduzierter Signalverarbeitungskapazität ist die Anzahl $P$ der Empfangsdatenkanäle $0,1,...,P-1$ entsprechend reduziert.

Das in den einzelnen Demodulatoren $17_0, 17_1,..., 17_{P-1}$ jeweils verwendete Demodulationsverfahren entspricht dem in den korrespondierenden Modulatoren $4_0, 4_1,..., 4_{N-1}$ der erfindungsgemäßen Vorrichtung zum Senden eines Datenstroms in einem Multiträger-Übertragungssignal verwendeten Modulationsverfahren. Das verwendete Modulationsverfahren kann somit in einer ersten Untervariante in jedem der Demodulatoren $17_0, 17_1,..., 17_{P-1}$ identisch sein oder in einer zweiten Untervariante in jedem der Demodulatoren $17_0, 17_1,..., 17_{P-1}$ subträger- oder subträgergruppenspezifisch sein.

Im Anschluss an die einzelnen Demodulatoren $17_0, 17_1,..., 17_{P-1}$ sind in jedem Empfangsdatenkanal $0,1,...,P-1$ jeweils Signalentzerrer $18_0, 18_1,..., 18_{P-1}$ geschaltet, die eventuell auftretende Intersymbol- und/oder Nachbarkanal-Interferenzen aus den demodulierten Teildatenströmen $\tilde{d}_0'[i], \tilde{d}_1'[i],..., \tilde{d}_{P-1}'[i]$ beseitigen.

Die entzerrten Teildatenströme $\tilde{d}_0''[i], \tilde{d}_1''[i],..., \tilde{d}_{P-1}''[i]$ in jedem der insgesamt $P$ Empfangsdatenkanäle $0,1,...,P-1$ werden einem Entschachtler 19 zugeführt, der zum Verschachtler 2 der erfindungsgemäßen Vorrichtung zum Senden eines Datenstroms in einem Mehrträger-Übertragungssignal korrespondiert. Es handelt sich in Abhängigkeit des beim Verschachtler 2 verwendeten Verschachtelungstyps um einen Block-Deinterleaver oder einen Faltungs-Deinterleaver. Nach der Entschachtelung der entzerrten Teildatenströme $\tilde{d}_0''[i], \tilde{d}_1''[i],..., \tilde{d}_{P-1}''[i]$ der einzelnen Empfangsdatenkanäle $0,1,...,P-1$ wird ein einziger entschachtelter Datenstrom mit entschachtelten Kodeworten $\tilde{d}'''[i]$ gebildet. Die entschachtelten Kodeworte des entschachtelten Datenstroms $\tilde{d}'''[i]$ enthalten jeweils eine zur Anzahl $P$ von demodulierten Subträgern $r_0(t), r_1(t),..., r_{P-1}(t)$ des empfangenen Mehrträger-Übertragungssignals $r(t)$ korrespondierende Anzahl von durch den Übertragungskanal verzerrten "Kopien" bzw. "Duplikaten" des in den korrespondierenden Kodeworten des Datenstroms mit Kodeworten $d'[i]$ jeweils enthaltenen Informationsgehalts.

In einem an den Entschachtler 19 sich anschließenden gemeinsamen Kanaldekodierer 20 werden aus den einzelnen entschachtelten Kodeworten des entschachtelten Datenstroms $\tilde{d}'''[i]$ die in einer Schätzung $\hat{d}[i]$ für den zu sendenden unkodierten Datenstrom $d[i]$ enthaltenen Nutzdaten auf der Basis des verwendeten Dekodierungsverfahrens ermittelt. Entspricht die Anzahl $P$ der Empfangsdatenkanäle $0,1,...,P-1$ der Anzahl $N$ von Subträgern des Mehrträger-Übertragungssignals und somit der Anzahl $N$ von Sendedatenkanälen $0,1,...,N-1$, so kann der gemeinsame Kanaldekodierer 20 alle Nutzdaten des gesendeten Datenstroms $d[i]$ im Empfänger bei höchst zu realisierender Datenqualität - entsprechend bei einer minimierten Bit-Error-Rate - rekonstruieren und der Empfänger verfügt über alle Nutzdaten des gesendeten Datenstroms $d[i]$. Die Datenkommunikation zwischen dem Sender und einem derartigen Empfänger funktioniert weitestgehend ohne Datenverlust.

Bei einer gegenüber der Anzahl $N$ von Subträgern des Mehrträger-Übertragungssignals reduzierten Anzahl $P$ von Empfangsdatenkanälen $0,1,...,P-1$ ist der gemeinsame Kanaldekodierer 20 nur beschränkt in der Lage, die Nutzdaten des gesendeten Datenstroms $d[i]$ zu rekonstruieren. Die Datenqualität der im Kanaldekodierer 20 geschätzten Nutzdaten des gesendeten Datenstroms $d[i]$ ist bei erhöhter Bit-Error-Rate reduziert. Die Datenkommunikation zwischen dem Sender und einem derartigen Empfänger ist somit auf eine gewisse Grundkommunikation essentieller Nutzdaten beschränkt.

Das verwendete Dekodierungsverfahren korrespondiert zum Kodierungsverfahren, das beim entsprechenden Kanalkodierer 1 der erfindungsgemäßen Vorrichtung zum Senden eines Datenstroms in einem Mehrträger-Übertragungssignal zum Einsatz kommt. Im Hinblick auf eine Optimierung der Kodierungsleistung kann auch eine iterative Dekodierung realisiert werden, indem Schätzungen $\hat{d}_0[i], \hat{d}_1[i],..., \hat{d}_{P-1}[i]$ für die den jeweils insgesamt $P$ Sendedatenkanälen zugewiesenen Teildatenströme $d_0[i], d_1[i],..., d_{P-1}[i]$ den in den korrespondierenden $P$ Empfangsdatenkanälen jeweils positionierten Signalentzerrern $18_0, 18_1, ..., 18_{P-1}$ - siehe gestrichelte Signalpfade - rückgekoppelt werden. Somit kann die Signalentzerrung der in den insgesamt $P$ Empfangsdatenkanälen demodulierten und in insgesamt $P$ Subträgersignalen $r_0(t), r_1(t),..., r_{P-1}(t)$ des empfangenen Mehrträger-Übertragungssignals $r(t)$ jeweils übertragenen Teildatenströme $\tilde{d}_0[i], \tilde{d}_1[i],..., \tilde{d}_{P-1}[i]$ sukzessive optimiert werden und damit auch der auf die sukzessive optimierte Signalentzerrung folgende Dekodierungsvorgang sukzessive verbessert werden.

In Fig. 2B ist die erste Ausführungsform der erfindungsgemäßen Vorrichtung zum Empfangen eines in einem Mehrträger-Übertragungssignals übertragenen Datenstroms dargestellt, bei dem das Mehrträger-Übertragungssignal mittels eines OFDM-Mehrträgerverfahrens mit Offset-QAM-Modulation gewonnen wird. Sie korrespondiert zu der in Fig. 1B dargestellten ersten Ausführungsform der erfindungsgemäßen Vorrichtung zum Senden eines Datenstroms in einem Mehrträger-Übertragungssignals eines OFDM-Mehrträgerverfahrens mit Offset-QAM-Modulation.

Das seriell im Empfänger empfangene Mehrträger-Übertragungssignal $r(V)$ wird über die einzelnen Verzögerungsglieder $21_1, 21_2, 21_{P-1}$ zum Aufteilen auf insgesamt $P$ Empfangsdatenkanäle $0,1,...,P-1$ und zum zeitparallelen Einlesen an den insgesamt $P$ Eingängen des Fast-Fourier-Transformators 24 parallelisiert.

Die Abtastfrequenz des in den einzelnen Empfangsdatenkanälen $0,1,...,P-1$ parallelisierten Mehrträger-ÜbertragungssignalS $r(V)$ wird über jeweils einen im jeweiligen Empfangsdatenkanal $0,1,...,P-1$ positionierten Abwärtstaster $22_0, 22_1,...,22_{P-1}$ um jeweils den Down-Sampling-Faktor $\dfrac{N}{2}$ reduziert, um die Erhöhung der Abtastfrequenz der einzelnen Subträgersignale $s_0(V), s_1(V),...,s_{N-1}(V)$ des Mehrträger-Übertragungssignals $s(V)$ in den Aufwärtstastern $12_0, 12_1,...,12_{N-1}$ der ersten Ausführungsform der erfindungsgemäßen Vorrichtung zum Senden eines Datenstroms in einem Mehrträger-Übertragungssignal um den Up-Sampling-Faktor wieder rückgängig zu machen.

Im Anschluss an die einzelnen Abwärtstaster $22_0, 22_1,...,22_{P-1}$ sind in den einzelnen Empfangsdatenkanälen $0,1,...,P-1$ jeweils Empfangsfilter $23_0, 23_1,...,23_{P-1}$ angeordnet, die als Matched-Filter ausgeführt sind und somit entsprechend dem Matched-Filter-Kriterium gemäß Gleichung (2) eine Übertragungsfunktion $F_0^{(p)}(z), F_1^{(p)}(z),...,F_{P-1}^{(p)}(z)$ mit einer Wurzel-Nyquist-Flanke mit Bandgrenzen bei der positiven bzw. negativen inversen Symboldauer $\pm \dfrac{1}{T}$ in Analogie zur Übertragungsfunktion $G_0^{(p)}(z), G_1^{(p)}(z),...,G_{N-1}^{(p)}(z)$ der Senderfilter $11_0, 11_1,...,11_{N-1}$ besitzen:

$$f_m(V) = g^{*}_m(-V) \qquad \text{mit} \quad m = 0,1,...,P-1 \qquad\qquad (2)$$

Die Empfangsfilter $23_0, 23_1, ...,23_{P-1}$ bewirken in Analogie zu den Senderfiltern $11_0, 11_1,...,11_{N-1}$ eine Orthogonalisierung der einzelnen Subträger des empfangenen Mehrträger-Übertragungssignals $r(V)$ im Zeit- und Frequenzbereich und damit eine Optimierung der Bandbreiteneffizienz.

Die Demodulation der Teildatenströme $\tilde{d}_0[i], \tilde{d}_1[i],...,\tilde{d}_{P-1}[i]$, die in den einzelnen Subträgern des empfangenen, hinsichtlich der Abtastfrequenz reduzierten und gefilterten Mehrträger-Übertragungssignals $r(V)$ übertragen werden, von ihren Subträgern erfolgt im Fast-Fourier-Transformator 24.

Anschließend erfolgt das zum Offset-QAM-Symbol-Mapping der erfindungsgemäßen Vorrichtung zum Senden eines Datenstroms in einem Mehrträger-Überragungssignal inverse Offset-QAM-Symbol-Demapping statt. Hierzu werden die demodulierten Teilströme $\tilde{d}_0[i], \tilde{d}_1[i],...,\tilde{d}_{P-1}[i]$ in den einzelnen Empfangsdatenkanälen $0,1,...,P-1$ im jeweiligen Multiplizierer $25_0, 25_1,...,25_{P-1}$ mit dem empfangsdatenkanalspezifischen Faktor $j^{-0}, j^{-1},...,j^{-(p-1)}$ multipliziert, der exakt invers zum jeweiligen sendedatenkanalspezifischen Faktor $j^0, j^1,...,j^{N-1}$ der in den einzelnen Sendedatenkanälen $0,1,...,N-1$ positionierten Multiplizierer $9_0, 9_1,...,9_{N-1}$ ausgebildet ist.

Nach der Multiplizierung wird die Bildung der demodulierten Teildatenströme $\tilde{d}_{R,0}[i], \tilde{d}_{R,1}[i],...,\tilde{d}_{R,P-1}[i]$, für den Inphase-Kanal des jeweiligen Empfangsdatenkanals $0,1,...,P-1$ durch den jeweiligen Realteil-Bildner $26_0, 26_1,...,26_{P-1}$, und die Bildung der demodulierten Teildatenströme $\tilde{d}_{I,0}[i], \tilde{d}_{I,1}[i],...,\tilde{d}_{I,P-1}[i]$ für den Quadratur-Kanal des jeweiligen Empfangsdatenkanals $0,1,...,P-1$ durch den jeweiligen Imaginärteil-Bildner $27_0, 27_1,...,27_{P-1}$ durchgeführt.

Im jeweiligen Quadratur-Kanal des jeweiligen Empfangsdatenkanals $0,1,...,P-1$ werden in Analogie zu den Verzögerern $7_0, 7_1,...,7_{N-1}$ der Offset-QAM-Modulation in der erfindungsgemäßen Vorrichtung zum Senden eines Datenstroms in einem Mehrträger-Übertragungssignal gemäß Fig. 1B die einzelnen demodulierten Teildatenströme $\tilde{d}_{I,0}[i], \tilde{d}_{I,1}[i],...,\tilde{d}_{I,P-1}[i]$ jeweils in einem Verzögerer $28_0, 28_1,...,28_{P-1}$ um eine halbe Symboldauer $\dfrac{T}{2}$ verzögert.

Die demodulierten Teildatenströme $\tilde{d}_{R,0}[i], \tilde{d}_{R,1}[i],...,\tilde{d}_{R,P-1}[i]$ im Inphase-Kanal des jeweiligen Empfangsdatenkanals $0,1,...,P-1$ und die um eine halbe Symboldauer $\dfrac{T}{2}$ verzögerten, demodulierten Teildatenströme $\tilde{d}_{I,0}[i], \tilde{d}_{I,1}[i],...,\tilde{d}_{I,P-1}[i]$ im Quadratur-Kanal des jeweiligen Empfangsdatenkanals $0,1,...,P-1$ werden in Abwärtstastern $29_0, 29_1,...,29_{P-1}$ bzw. $30_0, 30_1,...,30_{P-1}$, um den Down-Sampling-Faktor 2 in ihrer Abtastfrequenz reduziert, um dem Kanaldekodierer 20 nach der Signalentzerrung und der Zusammenführung der entzerrten Teildatenströme $\tilde{d}_{R,0}''[i'],\tilde{d}_{R,1}''[i'],...,\tilde{d}_{R,P-1}''[i']$ im Inphase-Kanal des jeweiligen Empfangsdatenkanals 0,1,...,$P$-1 und entzerrten Teildatenströme $\tilde{d}_{I,0}''[i'],\tilde{d}_{I,1}''[i'],...,\tilde{d}_{I,N-1}''[i']$ im Quadratur-Kanal des jeweiligen Empfangsdatenkanals 0,1,...,$P$-1 im Entschachtler 19 einen Datenstrom $\tilde{d}'''[i]$ zuzuführen, der dieselbe Taktfrequenz $i$ wie der zu sendende Datenstrom $d[i]$ aufweist.

Die um den Faktor 2 in ihrer Abtastfrequenz reduzierten Teildatenströme $\tilde{d}_{R,0}'[i'],\tilde{d}_{R,1}'[i'],...,\tilde{d}_{R,P-1}'[i']$ im Inphase-Kanal des jeweiligen Empfangsdatenkanals 0,1,...,$P$-1 und Teildatenströme $\tilde{d}_{I,0}'[i'],\tilde{d}_{I,1}'[i'],...,\tilde{d}_{I,P-1}'[i']$ im Quadratur-Kanal des jeweiligen Empfangsdatenkanals 0,1,...,$P$-1 werden den im jeweiligen Empfangsdatenkanal 0,1,...,$P$-1 positionierten Signalentzerrern $18_0,18_1,...,18_{P-1}$ zur Erzeugung von entzerrten Teildatenströmen $\tilde{d}_{R,0}''[i'],\tilde{d}_{R,1}''[i'],...,\tilde{d}_{R,P-1}''[i']$ im Inphase-Kanal des jeweiligen Empfangsdatenkanals 0,1,...,$P$-1 und entzerrten Teildatenströme $\tilde{d}_{I,0}''[i'],\tilde{d}_{I,1}''[i'],...,\tilde{d}_{I,P-1}''[i']$ im Quadratur-Kanal des jeweiligen Empfangsdatenkanals 0,1,...,$P$-1 zugeführt.

Abschließend erfolgt entsprechend der Beschreibung der ersten Ausführungsform der erfindungsgemäßen Vorrichtung zum Empfangen eines in einem Mehrträger-Übertragungssignal übertragenen Datenstroms gemäß Fig. 2A die Entschachtelung der entzerrten Teildatenströme $\tilde{d}_{R,0}''[i'],\tilde{d}_{R,1}''[i'],...,\tilde{d}_{R,P-1}''[i']$ im Inphase-Kanal des jeweiligen Empfangsdatenkanals 0,1,...,$P$-1 und der entzerrten Teildatenströme $\tilde{d}_{I,0}''[i'],\tilde{d}_{I,1}''[i'],...,\tilde{d}_{I,P-1}''[i']$ im Quadratur-Kanal des jeweiligen Empfangsdatenkanals 0,1,...,$P$-1 im Entschachtler 19 und die Kanaldekodierung der einzelnen entschachtelten Kodeworte des entschachtelten Datenstroms $\tilde{d}'''[i]$ im Kanaldekodierer 20 zur Ermittlung von Nutzdaten einer Schätzung $\hat{d}[i]$ für den zu sendenden, unkodierten Datenstrom $d[i]$.

In Fig. 2C ist eine zweite Ausführungsform der erfindungsgemäßen Vorrichtung zum Empfangen eines in einem Mehrträger-Übertragungssignal übertragenen Datenstroms dargestellt, die zu der in Fig. dargestellten zweiten Ausführungsform der erfindungsgemäßen Vorrichtung zum Senden eines Datenstroms in einem Mehrträger-Übertragungssignal korrespondiert.

Die Dekodierung ist als verkette Dekodierung realisiert, um eine optimierte Dekodierungs-Performance insbesondere bei hohen Übertragungsanforderungen zu erzielen.

Der äußere Kanaldekodierer 20' der zweiten Ausführungsform entspricht dem Kanaldekodierer 20 der ersten Ausführungsform. Analog entspricht der äußere Verschachtler 19' der zweiten Ausführungsform dem Verschachtler 19 der ersten Ausführungsform. Zusätzlich weist die zweite Ausführungsform in jedem Empfangsdatenkanal 0,1,...,$P$-1 jeweils einen inneren Kanaldekodierer $32_0,32_1,...,32_{P-1}$ auf.

Das in jedem inneren Kanaldekodierer $32_0,32_1,...,32_{P-1}$ jeweils verwendete Kanaldekodierungsverfahren ist in einer ersten Untervariante der zweiten Ausführungsform jeweils identisch, aber unterschiedlich zum Kanaldekodierungsverfahren des äußeren Kanaldekodierers 20'.

In einer zweiten Untervariante der zweiten Ausführungsform, die für den Anwendungsfall unterschiedlicher Signalverarbeitungskapazitäten der einzelnen empfangenden Teilnehmer wesentlicher ist, arbeiten die in jedem einzelnen Empfangsdatenkanal 0,1,...,$P$-1 positionierten Kanaldekodierer $32_0,32_1,...,32_{P-1}$ in Analogie zum Kanalkodierungsverfahren der Kanalkodierer $15_0,15_1,...,15_{N-1}$ der zweiten Untervariante der zweiten Ausführungsform der erfindungsgemäßen Vorrichtung zum Senden eines Datenstroms in einem Mehrträger-Übertragungssignal gemäß Fig. jeweils nach einem subträgerspezifischen oder subträgergruppenspezifischen Kanaldekodierungsverfahren. Auf diese Weise ist es wie bei der in der ersten Ausführungsform vorgestellten Verwendung einem subträger- oder subträgergruppenspezifischen Modulationsverfahrens möglich, dass Empfänger mit reduzierter Signalverarbeitungskapazität vergleichsweise einfach einzig auf Subträger oder Gruppen von Subträgern des Mehrträger-Übertragungssignals zugreifen, die mit einem Kodierungsverfahren des jeweiligen inneren Kanalkodierers kodiert sind, das mit dem im inneren Kanaldekodierer des Empfängers verwendeten Kanaldekodierungsverfahren kompatibel ist.

Optional kann jeder Empfangsdatenkanal 0,1,...,$P$-1 in Analogie zu den inneren Verschachtlern $16_0,16_1,...,16_{N-1}$ der einzelnen Sendedatenkanäle 0,1,...,$N$-1 der zweiten Ausführungsform der erfindungsgemäßen Vorrichtung zum Senden eines Datenstroms in einem Mehrträger-Übertragungssignal gemäß Fig. vor jedem einzelnen inneren Kanaldekodierer $32_0,32_1,...,32_{P-1}$ jeweils einen inneren Entschachtler $31_0,31_1,...,31_{P-1}$ aufweisen.

In einer dritten Ausführungsform der erfindungsgemäßen Vorrichtung zum Empfangen eines in einem Mehrträger-Übertragungssignal übertragenen Datenstroms gemäß Fig. 2D werden von einem Empfänger mit reduzierter Signalverarbeitungskapazität nur diejenigen in den jeweiligen Subträgern des Mehrträger-Übertragungssignals übertragenen und demodulierten Teildatenströme $\tilde{d}_0[i],\tilde{d}_1[i],...,\tilde{d}_{P-1}[i]$ hinsichtlich Signalentzerrung und Kanaldekodierung weiterverarbeitet, die vergleichsweise ungestört empfangen werden. Als Bezugsgröße zur Bestimmung eines vergleichsweise ungestörten Empfangs eines Teildatenstroms kann der Signalpegel des jeweiligen Teildatenstroms dienen, der bei starker Dämpfung im Frequenzband des zugehörigen Subträgers entsprechend reduziert ist.

Zur Ausblendung eines vergleichsweise gestörten Teildatenstroms $\tilde{d}_0'[i],\tilde{d}_1'[i],...,\tilde{d}_{P-1}'[i]$ des empfangenen Mehrträger-Übertragungssignals $r(t)$ sind in jedem Empfangsdatenkanal 0,1,...,$P$-1 im Anschluss an die jeweiligen Demodulatoren $17_0,17_1,...,17_{P-1}$ Vergleicher $33_0,33_1,...,33_{P-1}$ angeordnet, die den Signalpegel des jeweiligen Teildatenstroms $\tilde{d}_0'[i],\tilde{d}_1'[i],...,\tilde{d}_{P-1}'[i]$ mit einem geeignet gewählten Referenzsignalpegel vergleichen und bei Feststellung einer Unterschreitung des Referenzsignalpegels durch den Signalpegel des jeweiligen Teildatenstroms $\tilde{d}_0'[i],\tilde{d}_1'[i],...,\tilde{d}_{P-1}'[i]$

die Weiterleitung des jeweiligen Teildatenstroms $\tilde{d}_0{}'[i],\tilde{d}_1{}'[i],...,\tilde{d}_{P-1}{}'[i]$ an den jeweiligen Signalentzerrer $18_0,18_1,...,18_{P-1}$ in einem an den jeweiligen Vergleicher $33_0,33_1,...,33_{P-1}$ nachfolgenden Schalter $34_0,34_1,...,34_{P-1}$ weiterleiten.

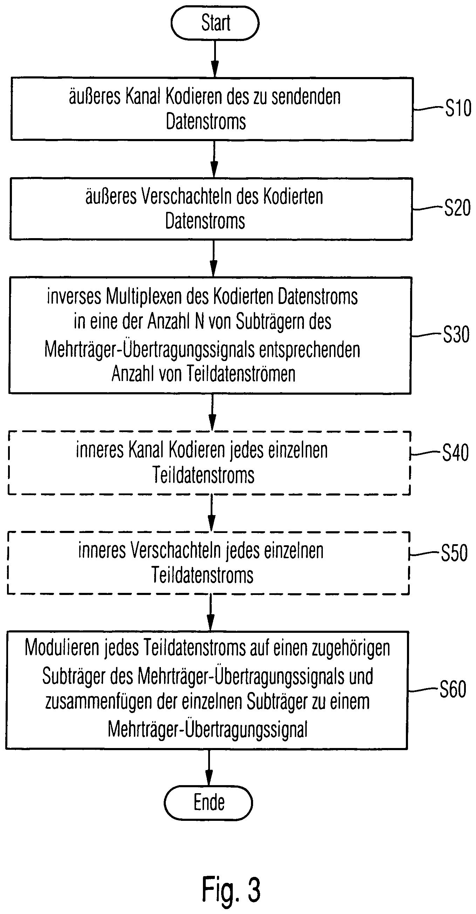

Im Folgenden wird das erfindungsgemäße Verfahren zum Senden eines Datenstroms in einem Mehrträger-Übertragungssignal anhand des Flussdiagramms in Fig. 3 erläutert.

Im ersten Verfahrensschritt S10 wird der zu sendende Datenstrom $d[i]$ mit einem geeigneten Kanalkodierungsverfahren kodiert. Die Koderate $R$ ist hierbei erfindungsgemäß so zu wählen, dass sie kleiner oder gleich der inversen

$$\frac{1}{P_{MIN}}$$

minimalen Anzahl von Empfangsdatenkanälen ist, die in einem oder mehreren der Empfänger des Übertragungs-Netzes realisiert sind. Somit enthält der kodierte Datenstrom $d'[i]$ eine der minimalen Anzahl von Empfangsdatenkanäle entsprechende Anzahl von "Kopien" bzw. "Duplikationen" des in einem oder mehreren aufeinander folgenden Datenworten des unkodierten Datenstroms $d[i]$ enthaltenen Informationsgehalts in seinen zu den Datenworten korrespondierenden Kodeworten.

Als Kanalkodierungsverfahren kann jeder geeignete Typ von Kanalkodierungsverfahren - beispielsweise Blockkodierung, Faltungskodierung, Turbo-Kodierung usw. - zur Anwendung kommen. Bei Realisierung einer verketteten Kodierung stellt die Kanalkodierung des Verfahrensschritts S10 die äußere Kanalkodierung dar, die mit der in Verfahrensschritt S40 implementierten inneren Kanalkodierung kombiniert ist.

Im nächsten Verfahrensschritt S20 erfolgt die Verschachtelung des kodierten Datenstroms $d'[i]$ mit einem geeigneten Verschachtelungsverfahren. Der Typ des Verschachtelungsverfahren ist zum Typ des Kodierungsverfahrens abzustimmen - beispielsweise Block-Interleaver in Kombination mit Blockkodierer oder Faltungs-Interleaver in Kombination mit Faltungskodierer - , um eine gleichmäßige Verschachtelung bzw. Verteilung der in den Kodeworten des kodierten Datenstroms $d'[i]$ enthaltenen "Kopien" bzw. "Duplikate" des in den einzelnen Datenworten des unkodierten Datenstroms $d[i]$ enthaltenen Informationsgehalts auf die einzelnen verschachtelten Kodeworte des verschachtelten Datenstroms $d''[i]$ zu erzielen.

Im darauffolgenden Verfahrensschritt S30 erfolgt das gleichmäßige Aufteilen des verschachtelten Datenstroms $d''[i]$ auf eine der Anzahl $N$ von Subträgern des Mehrträger-Übertragungssignals entsprechende Anzahl von Teildaten-strömen $d_0{}''[i],d_1{}''[i],...,d_{N-1}{}''[i]$ mittels inversen Multiplexens.

Die im vorherigen Verfahrensschritt S30 den insgesamt $N$ Sendedatenkanälen $0,1,...,N-1$ zugewiesenen Teil-datenströme $d_0{}''[i],d_1{}''[i],...,d_{N-1}{}''[i]$ werden bei Anwendung einer verketteten Kodierung im optional durchgeführten Verfahrensschritt S40 jeweils mit einem inneren Kanalkodierungsverfahren einzeln kodiert. Das innere Kanalkodierungsverfahren weist dabei gegenüber dem eingesetzten äußeren Kanalkodierungsverfahren zusätzliche Vorzüge - beispielsweise Beherrschung von sogenannten Bündelfehlern - auf und optimiert somit die Kodierungsqualität. Das bei der inneren Kanalkodierung verwendete Kanalkodierungsverfahren kann für alle Teildatenströme $d_0{}''[i],d_1{}''[i],...,d_{N-1}{}''[i]$ identisch sein oder für einzelne oder alle Teildatenströme $d_0{}''[i],d_1{}''[i],...,d_{N-1}{}''[i]$ jeweils unterschiedlich (subträger- bzw. sendedatenkanalspezifische oder subträgergruppen- oder sendedatenkanalgruppenspezifische Modulation).

Der ebenfalls optional durchgeführte Verfahrensschritt S50 beinhaltet ein inneres Verschachteln der einzelnen Teildatenströme $d_0{}''[i],d_1{}''[i],...,d_{N-1}{}''[i]$ mit einem zum Typ des inneren Kanalkodierungsverfahrens passenden Typ von Verschachtelungsverfahren.

Im abschließenden Verfahrensschritt S60 erfolgt die Modulation jedes einzelnen Teildatenstroms $d_0{}''[i],d_1{}''[i],...,d_{N-1}{}''[i]$ auf das zugehörige Subträgersignal $s_0(V),s_1(V),...,s_{N-1}(V)$ und die additive Zusammenfügung der einzelnen Subträgersignale $s_0(V),s_1(V),...,s_{N-1}(V)$ zum Mehrträger-Übertragungssignal $s(V)$. Das verwendete Modulationsverfahren kann für alle Teildatenströme $d_0{}''[i],d_1{}''[i],...,d_{N-1}{}''[i]$ identisch sein - bevorzugt OFDM-Offset-QAM-Modulation - oder für einzelne oder alle Teildatenströme $d_0{}''[i],d_1{}''[i],...,d_{N-1}{}''[i]$ jeweils unterschiedlich (subträger- bzw. sendedatenkanalspezifische oder subträgergruppen- bzw. sendedatenkanalgruppenspezifische Modulation).

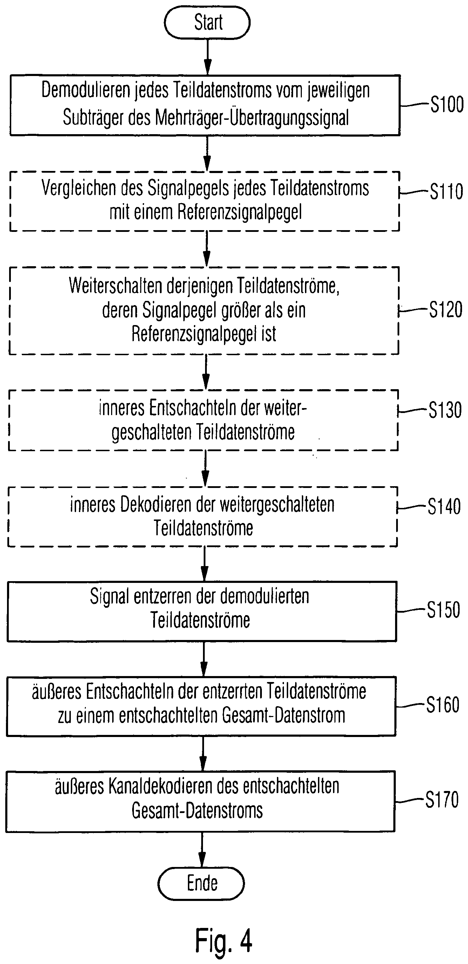

Das erfindungsgemäße Verfahren zum Empfangen eines in einem Mehrträger-Übertragungssignal übertragenen Datenstroms beginnt gemäß dem Flussdiagramm in Fig. 4 im ersten Verfahrensschritt S100 mit dem Demodulieren der einzelnen Teildatenströme $\tilde{d}_0{}'[i],\tilde{d}_1{}'[i],...,\tilde{d}_{P-1}{}'[i]$ von den zugehörigen Subträgersignalen $r_0(t),r_1(t),...,r_{P-1}(t)$ des empfangenen Mehrträger-Übertragungssignals $r(t)$ in jeweils einem der Demodulatoren $17_0,17_1,...,17_{P-1}$, die jeweils in einem der insgesamt $P$ Empfangsdatenkanäle $0,1,...,P-1$ angeordnet sind. Das im Demodulator $17_0,17_1,...,17_{P-1}$ des jeweiligen Empfangsdatenkanals $0,1,...,P-1$ verwendete Demodulationsverfahren entspricht dem Modulationsverfahren des den-selben Subträger bearbeitenden Modulators $4_0,4_1,...,4_{N-1}$ des jeweiligen Sendedatenkanals $0,1,...,N-1$. Das Demodulationsverfahren kann folglich in Analogie zum verwendeten Modulationsverfahren bei den einzelnen Modulatoren $4_0,4_1,...,4_{N-1}$ des jeweiligen Sendedatenkanals $0,1,...,N-1$ bei allen Demodulatoren $17_0,17_1,...,17_{P-1}$ identisch oder bei einzelnen oder allen Demodulatoren $17_0,17_1,...,17_{P-1}$ unterschiedlich sein (subträger- bzw. empfangdatenkanalspezifisches oder subträgergruppen- bzw. empfangdatenkanalgruppenspezifisches Demodulieren).

Im nächsten optional durchzuführenden Verfahrensschritt S110 werden einzelne demodulierte Teildatenströme $\tilde{d}_0{}'[i],\tilde{d}_1{}'[i],...,\tilde{d}_{P-1}{}'[i]$ identifiziert, die aufgrund von Störungen im Frequenzband des zugehörigen Subträgers gestört sind und damit in der Signalverarbeitung des Empfängers nicht mehr weiterverfolgt werden. Als Bezugsgröße zur Ermittlung eines vergleichsweise ungestörten Teildatenstroms $\tilde{d}_0{'}[i], \tilde{d}_1{'}[i], ..., \tilde{d}_{P-1}{'}[i]$ wird der Signalpegel des demodulierten Teildatenstroms $\tilde{d}_0{'}[i], \tilde{d}_1{'}[i], ..., \tilde{d}_{P-1}{'}[i]$ bevorzugt benutzt. Von der Erfindung ist aber auch die Verwendung anderer Bezugsgrößen der einzelnen demodulierten Teildatenströme $\tilde{d}_0{'}[i], \tilde{d}_1{'}[i], ..., \tilde{d}_{P-1}{'}[i]$ wie beispielsweise der Klirrfaktor oder der Signal-Rausch-Abstand abgedeckt. Bei Verwendung des Signalpegels als Bezugsgröße wird der Signalpegel jedes demodulierten Teildatenstroms $\tilde{d}_0{'}[i], \tilde{d}_1{'}[i], ..., \tilde{d}_{P-1}{'}[i]$ mit einem identischen, geeignet ausgewählten Referenzsignalpegel verglichen.

Bei Unterschreitung des Referenzsignalpegels durch den Signalpegel eines oder mehrerer demodulierter Teildatenströme $\tilde{d}_0{'}[i], \tilde{d}_1{'}[i], ..., \tilde{d}_{P-1}{'}[i]$ wird im darauffolgenden, ebenfalls optional durchzuführenden Verfahrensschritt S120 der jeweilige demodulierte Teildatenstrom $\tilde{d}_0{'}[i], \tilde{d}_1{'}[i], ..., \tilde{d}_{P-1}{'}[i]$ zur nachfolgenden Signalverarbeitung nicht weitergeschaltet.

Bei Verwendung eines inneren Verschachteln der Teildatenströme $d_0{''}[i], d_1{''}[i], ..., d_{N-1}{''}[i]$ in den einzelnen Sendedatenkanälen $0,1,...,N$-1 im Verfahrensschritt S50 des erfindungsgemäßen Verfahrens zum Senden eines Datenstroms in einem Mehrträger-Übertragungssignals gemäß Fig. 3 wird dazu korrespondierend im nächsten, ebenfalls optional durchzuführenden Verfahrensschritt S130 ein inneres Entschachteln der einzelnen demodulierten und weitergeleiteten Teildatenströme $\tilde{d}_0{'}[i], \tilde{d}_1{'}[i], ..., \tilde{d}_{P-1}{'}[i]$ durchgeführt.

Bei Anwendung einer verketteten Kanalkodierung werden im darauffolgenden, ebenfalls optional durchzuführenden Verfahrensschritt S140 die einzelnen demodulierten und weitergeleiteten Teildatenströme $\tilde{d}_0{'}[i], \tilde{d}_1{'}[i], ..., \tilde{d}_{P-1}{'}[i]$ in den einzelnen Empfangsdatenkanälen $0,1,...,P$-1 mit einem inneren Kanaldekodierungsverfahren dekodiert, das zum Kodierungsverfahren beim inneren Kodieren gemäß Verfahrensschritt S40 des erfindungsgemäßen Verfahrens zum Senden eines Datenstroms in einem Mehrträger-Übertragungssignals gemäß Fig. 3 korrespondiert. Somit kann das beim inneren Dekodieren verwendete Kodierungsverfahren bei allen inneren Kanaldekodierern $32_0, 32_1, ..., 32_{P-1}$ identisch oder bei einzelnen oder allen inneren Kanaldekodierern $32_0, 32_1, ..., 32_{P-1}$ unterschiedlich sein (subträger- bzw. empfangsdatenkanalspezifisches oder subträgergruppen- bzw. empfangsdatenkanalgruppenspezifisches Dekodieren).

Im darauffolgenden Verfahrensschritt S150 erfolgt die Entzerrung der demodulierten und weitergeleiteten Teildatenströme $\tilde{d}_0{'}[i], \tilde{d}_1{'}[i], ..., \tilde{d}_{P-1}{'}[i]$ in den einzelnen Signalentzerrern $18_0, 18_1, ..., 18_{P-1}$ der einzelnen Empfangsdatenkanäle $0,1,...,P$-1.

Die entzerrten Teildatenströme $\tilde{d}_0{''}[i], \tilde{d}_1{''}[i], ..., \tilde{d}_{P-1}{''}[i]$ werden im nächsten Verfahrensschritt S160 dem äußeren Entschachtler 19 bzw. 19' zum Entschachteln der einzelnen entzerrten Teildatenströme $\tilde{d}_0{''}[i], \tilde{d}_1{''}[i], ..., \tilde{d}_{P-1}{''}[i]$ und zur Bildung eines entschachtelten Gesamt-Datenstroms $\tilde{d}{'''}[i]$ zugeführt, wobei das beim äußeren Entschachteln verwendete Entschachtelungsverfahren zum Verschachtelungsverfahren beim äußeren Verschachteln in Verfahrensschritt S20 des erfindungsgemäßen Verfahrens zum Senden eines Datenstroms in einem Mehrträger-Übertragungssignal gemäß Fig. 3 korrespondiert.

Im abschließenden Verfahrensschritt S170 erfolgt die äußere Kanaldekodierung mit einem Kanaldekodierungsverfahren, das zum Kanalkodierungsverfahren des äußeren Kanalkodierens in Verfahrensschritt S10 des erfindungsgemäßen Verfahrens zum Senden eines Datenstroms in einem Mehrträger-Übertragungssignal gemäß Fig. 3 korrespondiert.

Die Erfindung ist nicht auf die dargestellten Ausführungsformen und Untervarianten der erfindungsgemäßen Vorrichtung und des erfindungsgemäßen Verfahrens zum Senden eines Datenstroms in einem Mehrträger-Übertragungssignal und der erfindungsgemäßen Vorrichtung und des erfindungsgemäßen Verfahrens zum Empfangen eines in einem Mehrträger-Übertragungssignal übertragenen Datenstroms beschränkt. Von der Erfindung sind insbesondere neben dem dargestellten OFDM-Offset-QAM-Mehrträger-Übertragungsverfahren auch andere Mehrträger-Übertragungsverfahren mit optimierter Bandbreiteneffizienz mit abgedeckt.

**Patentansprüche**

1. Verfahren zum Senden eines Datenstroms in einem Mehrträger-Übertragungssignal von einem Sender zu mehreren Empfängern mit folgenden Verfahrensschritten:

   • Kodieren des Datenstroms ($d[i]$) in einen Datenstrom von Kodeworten ($d'[i]$) mit einer Koderate, die kleiner oder gleich einem Wert ist, der sich aus einer Invertierung einer kleinsten Anzahl von in jedem Empfänger jeweils verarbeitbaren Subträgersignalen ($s_0(t), s_1(t), ..., s_{N-1}(t)$) des Mehrträger-Übertragungssystems $(s(t))$ ergibt,
   • Verschachteln von Dateneinheiten mindestens eines Kodewortes des Datenstroms von Kodeworten ($d'[i]$) in einen Datenstrom mit verschachtelten Kodeworten ($d''[i]$),
   • Demultiplexen des Datenstroms mit verschachtelten Kodeworten (($d''[i]$) auf einzelne den einzelnen Subträgern des Mehrträger-Übertragungssignals ($s(t)$) entsprechende Sendedatenkanäle,
   • Modulieren der dem jeweiligen Sendedatenkanal jeweils zugewiesenen verschachtelten Kodeworte des Datenstroms mit verschachtelten Kodeworten ($d_0''[i], d_1''[i],..., d_{N-1}''[i]$) auf einem zum jeweiligen Sendedatenkanal ($0,1,...,N$-1) gehörigen Subträgersignal ($s_0(t), s_1(t),..., s_{N-1}(t)$) und

• Zusammenfügen sämtlicher Subträgersignale ($s_0(t), s_1(t),..., s_{N-1}(t)$) mit den zum jeweiligen Sendedatenkanal ($0,1,...,N$-1) jeweils zugewiesenen verschachtelten Kodeworten des Datenstroms mit verschachtelten Kodeworten ($d_0''[i], d_1''[i],..., d_{N-1}''[i]$) zu einem Multiträger-Übertragungssignal ($s(t)$).

2. Verfahren zum Senden eines Datenstroms in einem Mehrträger-Übertragungssignal nach Anspruch 1,
**dadurch gekennzeichnet,**
**dass** die jedem Sendedatenkanal ($0,1,...,N$-1) durch Demultiplexen des Datenstroms mit verschachtelten Kodeworten ($d''[i]$) jeweils zugewiesene Anzahl von verschachtelten Kodeworten multipliziert mit der Länge des einzelnen verschachtelten Kodewortes der Anzahl von beim Verschachteln des Datenstroms von Kodeworten (($d''[i]$) jeweils benutzten Kodeworten entspricht.

3. Verfahren zum Senden eines Datenstroms in einem Mehrträger-Übertragungssignal nach Anspruch 1 oder 2,
**dadurch gekennzeichnet,**
**dass** das Modulieren der dem jeweiligen Sendedatenkanal ($0,1,...,N$-1) jeweils zugewiesenen verschachtelten Kodeworte des Datenstroms mit verschachtelten Kodeworten ($d''[i]$) auf einen zum jeweiligen Sendedatenkanal ($0,1,...,N$-1) gehörigen Subträger mit einem für den jeweiligen Sendedatenkanal ($0,1,...,N$-1) spezifischen Modulationsverfahren erfolgt.

4. Verfahren zum Senden eines Datenstroms in einem Mehrträger-Übertragungssignal nach einem der Ansprüche 1 bis 3,
**dadurch gekennzeichnet,**
**dass** das Kodieren des Datenstroms ($d[i]$) ein äußeres Kodieren des Datenstroms ($d[i]$) ist und nach dem Demultiplexen ein inneres Kodieren der dem jeweiligen Sendedatenkanal ($0,1,...,N$-1) jeweils zugewiesenen verschachtelten Kodeworte des Datenstroms mit verschachtelten Kodeworten ($d_0''[i], d_1''[i],..., d_{N-1}''[i]$) mit einem für den jeweiligen Sendedatenkanal ($0,1,...,N$-1) spezifischen inneren Kodierungsverfahren erfolgt.

5. Verfahren zum Empfangen eines in einem Mehrträger-Übertragungssignal übertragenen Datenstroms, das mit einem Verfahren der Ansprüche 1 bis 4 gesendet wurde, in einem Empfänger mit folgenden Verfahrensschritten:

• Demodulieren des empfangenen Mehrträger-Übertragungssignals ($r(t)$) in mindestens einem in einem jeweiligen Subträgersignal ($r_0(t), r_1(t),..., r_{P-1}(t)$) des empfangenen Mehrträger-Übertragungssignal ($r(t)$) übertragenen Datenstrom mit verschachtelten Kodeworten ($\tilde{d}_0'[i], \tilde{d}_1'[i],..., \tilde{d}_{P-1}'[i]$) in jeweils einem Empfangsdatenkanal ($0,1,...,P$-1) und Entzerren des jeweiligen demodulierten Datenstroms ($\tilde{d}_0'[i], \tilde{d}_1'[i],..., \tilde{d}_{P-1}'[i]$) im jeweiligen Empfangsdatenkanal,
wobei die minimale Anzahl der Empfangsdatenkanäle ($0,1,...,P$-1), in denen die in den einzelnen Subträgersignalen ($r_0(t), r_1(t),..., r_{P-1}(t)$) des empfangenen Mehrträger-Übertragungssignals ($r(t)$) jeweils übertragenen Datenströme mit verschachtelten Kodeworten jeweils demoduliert und entzerrt werden, von der Signalverarbeitungskapazität des jeweiligen Empfängers abhängt, und
• Entschachteln und zum Kodieren korrespondierendes Dekodieren aller in den einzelnen Empfangskanälen jeweils demodulierten und entzerrten Datenströme ($\tilde{d}_0''[i], \tilde{d}_1''[i],..., \tilde{d}_{P-1}''[i]$) des empfangenen Mehrträger-Übertragungssignals ($r(t)$).

6. Verfahren zum Empfangen eines in einem Mehrträger-Übertragungssignal übertragenen Datenstroms nach Anspruch 5,
**dadurch gekennzeichnet,**
**dass** nach dem Demodulieren des im jeweiligen Subträgersignal ($r_0(t), r_1(t),..., r_{P-1}(t)$) des Mehrträger-Übertragungssignals ($r(t)$) jeweils übertragenen Datenstroms mit verschachtelten Kodeworten der Signalpegel des im jeweiligen Empfangsdatenkanal demodulierten Datenstroms ($\tilde{d}_0'[i], \tilde{d}_1'[i],..., \tilde{d}_{P-1}'[i]$) mit einem Referenzsignalpegel verglichen wird und nur derjenige im jeweiligen Empfangsdatenkanal demodulierte Datenstrom ($\tilde{d}_0'[i], \tilde{d}_1'[i],..., \tilde{d}_{P-1}'[i]$) entzerrt und dekodiert wird, dessen Signalpegel größer als der Referenzsignalpegel ist.

7. Verfahren zum Empfangen eines in einem Mehrträger-Übertragungssignal übertragenen Datenstroms nach Anspruch 5 oder 6,
**dadurch gekennzeichnet,**
**dass** das Dekodieren aller in den einzelnen Empfangskanälen jeweils demodulierten und entzerrten Datenströme

$(\tilde{d}_0''[i],\tilde{d}_1''[i],...,\tilde{d}_{P-1}''[i])$ ein äußeres Dekodieren

aller in den einzelnen Empfangsdatenkanälen jeweils demodulierten und entzerrten Datenströme $(\tilde{d}_0''[i],\tilde{d}_1''[i],...,\tilde{d}_{P-1}''[i])$ ist und nach dem Demodulieren ein zu einem inneren Kodieren korrespondierendes inneres Dekodieren des im jeweiligen Empfangsdatenkanal jeweils demodulierten Datenstroms mit verschachtelten Kodeworten $(\tilde{d}_0'[i],\tilde{d}_1'[i],...,\tilde{d}_{P-1}'[i])$ erfolgt.

8. Verfahren zum Empfangen eines in einem Mehrträger-Übertragungssignal übertragenen Datenstroms nach einem der Ansprüche 5 bis 7,
**dadurch gekennzeichnet,**
**dass** alle Empfänger in Abhängigkeit eines zwischen allen Empfängern stattfindenden Abstimmungsprozesses jeweils eine identische Anzahl von in einzelnen Subträgersignalen $(r_0(t),r_1(t),...,r_{P-1}(t))$ des Mehrträger-Übertragungssignals $(r(t))$ jeweils übertragenen Datenströmen mit verschachtelten Kodeworten in einer identischen Anzahl von Empfangsdatenkanälen jeweils demodulieren und entzerren.

9. Vorrichtung zum Senden eines Datenstroms $(d[i])$ in einem Mehrträger-Übertragungssignal $(s(t))$ zu mehreren Empfängern, zur Durchführung eines Verfahrens nach einem der Ansprüche 1 bis 4, mit einem Kodierer $(1;1')$ zum Kodieren des Datenstroms $(d[i])$ in einen Datenstrom von Kodeworten $(d'[i])$ mit einer Koderate, die kleiner oder gleich einem Wert ist, der sich aus einer Invertierung einer kleinsten Anzahl von in jedem Empfänger jeweils verarbeitbaren Subträgersignalen $(s_0(t),s_1(t),...,s_{N-1}(t))$ des Mehrträger-Übertragungssignals $(s(t))$ ergibt,
einem Verschachtler (2) zum Verschachteln von Dateneinheiten des Datenstroms von Kodeworten $(d'[i])$ in einen Datenstrom mit verschachtelten Kodeworten $(d''[i])$,
einem Demultiplexer (3) zum Demultiplexen des Datenstroms mit verschachtelten Kodeworten $(d''[i])$ auf einzelne den einzelnen Subträgersignalen $(s_0(t),s_1(t),...,s_{N-1}(t))$ des Mehrträger-Übertragungssignals $(s(t))$ entsprechende Sendedatenkanäle $(0,1,...,N\text{-}1)$, einem Modulierer $(4_0,4_1,...,4_{N-1})$ zum Modulieren der dem jeweiligen Sendedatenkanal $(0,1,...,N\text{-}1)$ jeweils zugewiesenen Datenstroms mit verschachtelten Kodeworten $(d_0''[i],d_1''[i],...,d_{N-1}''[i])$ auf einem zum jeweiligen Sendedatenkanal $(0,1,...,N\text{-}1)$ gehörigen Subträgersignal $(s_0(t),s_1(t),...,s_{N-1}(t))$ des Mehrträger-Übertragungssignals $(s(t))$ und
einem Addierer (5) zum Zusammenfügen sämtlicher Subträgersignale $(s_0(t),s_1(t),...,s_{N-1}(t))$ zum Mehrträger-Übertragungssignal $(s(t))$.

10. Vorrichtung zum Senden eines Datenstroms in einem Mehrträger-Übertragungssignal nach Anspruch 9,
**dadurch gekennzeichnet,**
**dass** der Kodierer $(1;1')$ ein äußerer Kodierer $(1')$ ist und nach dem Demultiplexer (3) ein innerer Kodierer $(15_0,15_1,...,15_{N-1})$ zum inneren Kodieren des dem jeweiligen Sendedatenkanal $(0,1,...,N\text{-}1)$ jeweils zugewiesenen Datenstroms mit verschachtelten Kodeworten $(d_0''[i],d_1''[i],...,d_{N-1}''[i])$ mit einem für den jeweiligen Sendedatenkanal $(0,1,...,N\text{-}1)$ spezifischen inneren Kodierungsverfahren geschaltet ist.

11. Vorrichtung zum Empfangen eines in einem Mehrträger-Übertragungssignal übertragenen Datenstroms, zur Durchführung eines Verfahrens nach einem der Ansprüche 5 bis 8, mit
in mindestens einem Empfangsdatenkanal jeweils seriell geschalteten Demodulator $(17_0,17_1,...,17_{P-1})$ zum Demodulieren des empfangenen Mehrträger-Übertragungssignals $(r(t))$ in mindestens einen in einem jeweiligen Subträgersignal $(r_0(t),r_1(t),...,r_{P-1}(t))$ des empfangenen Mehrträger-Übertragungssignal $(r(t))$ übertragenen Datenstrom $(\tilde{d}_0'[i],\tilde{d}_1'[i],...,\tilde{d}_{P-1}'[i])$
einem Entzerrer $(18_0,18_1,...,18_{P-1})$ zum Entzerren des demodulierten Datenstroms $(\tilde{d}_0'[i],\tilde{d}_1'[i],...,\tilde{d}_{P-1}'[i])$ und mit
einem allen Empfangsdatenkanälen nachgeschalteten Entschachtler $(19;19')$ zum Entschachteln der in den einzelnen Empfangsdatenkanälen demodulierten Datenströme $(\tilde{d}_0'[i],\tilde{d}_1'[i],...,\tilde{d}_{P-1}'[i])$ und
einem zum sendeseitigen Kodierer $(1;1')$ korrespondierenden Dekodierer $(20;20',32_0,32_1,...,32_{P-1})$ zum Dekodieren des entschachtelten Datenstroms $(d'''[i])$, wobei die Anzahl der Empfangsdatenkanäle, in denen die in den einzelnen Subträgersignalen $(r_0(t),r_1(t),...,r_{P-1}(t))$ des Mehrträger-Übertragungssignals $(r(t))$ jeweils übertragenen Datenströme mit verschachtelten Kodeworten jeweils demoduliert und entzerrt werden, von der Signalverarbeitungskapazität des jeweiligen Empfängers abhängt.

12. Vorrichtung zum Empfangen eines Datenstroms in einem Empfänger eines Mehrträger-Übertragungssystems nach Anspruch 11,
**dadurch gekennzeichnet,**
**dass** in jedem Empfangsdatenkanal nach dem Demodulator $(17_0,17_1,...,17_{P-1})$ jeweils ein Vergleicher $(33_0,33_1,...,33_{P-1})$ zum Vergleichen des Signalpegels des im jeweiligen Empfangsdatenkanal demodulierten Datenstroms $(\tilde{d}_0'[i],\tilde{d}_1'[i],...,\tilde{d}_{P-1}'[i])$ mit einem Referenzsignal und jeweils ein Schalter $(34_0,34_1,...,34_{P-1})$ zum Durchschalten

des demodulierten Datenstroms ($\tilde{d}_0'[i],\tilde{d}_1'[i],...,\tilde{d}_{P-1}'[i]$) zum Entschachtler (19;19') und Dekodierer (20;20') im Fall eines zum Referenzsignalpegel größeren Signalpegels des demodulierten Datenstroms ($\tilde{d}_0'[i],\tilde{d}_1'[i],...,\tilde{d}_{P-1}'[i]$) geschaltet ist.

13. Vorrichtung zum Empfangen eines Datenstroms in einem Empfänger eines Mehrträger-Übertragungssystems nach Anspruch 11 oder 12,
**dadurch gekennzeichnet,**
**dass** der Dekodierer (20;20') ein äußerer Dekodierer (20') ist und in jedem Empfangsdatenkanal nach dem Demodulator ($17_0,17_1,...,17_{P-1}$) ein zum inneren Kodierer ($15_0,15_1,...,15_{N-1}$) korrespondierender innerer Dekodierer ($32_0,32_1,...,32_{P-1}$) zum inneren Dekodieren des demodulierten Datenstroms ($\tilde{d}_0'[i],\tilde{d}_1'[i],...,\tilde{d}_{P-1}'[i]$) geschaltet ist.

## Claims

1. Method for transmitting a data stream in a multi-carrier transmission signal from a transmitter to a plurality of receivers with the following method steps:

   • Coding of the data stream ($d[i]$) in a data stream of code words ($d'[i]$) with a code rate which is less than or equal to a value which is produced by inversion of a smallest number of sub-carrier signals ($s_0(t),s_1(t),...,s_{N-1}(t)$) of the multi-carrier transmission system ($s(t)$) that can be processed in each case in each receiver,
   • Interleaving of data units of at least one code word of the data stream of code words ($d'[i]$) in a data stream with interleaved code words ($d''[i]$),
   • Demultiplexing of the data stream with interleaved code words ($d''[i]$) onto individual transmission data channels corresponding to the individual sub-carriers of the multi-carrier transmission signal ($s(t)$),
   • Modulation of the interleaved code words of the data stream with interleaved code words ($d_0''[i],d_1''[i],...,d_{N-1}''[i]$) assigned in each case to the respective transmission data channel on a sub-carrier signal ($s_0(t),s_1(t),...,s_{N-1}(t)$) associated with the respective transmission data channel (0,1,...,$N$-1), and
   • Adding together all the sub-carrier signals ($s_0(t),s_1(t),...,s_{N-1}(t)$) with the interleaved code words of the data stream with interleaved code words ($d_0''[i],d_1''[i],...,d_{N-1}''[i]$) assigned in each case to the respective transmission data channel (0,1,...,$N$-1) to form a multi-carrier transmission signal ($s(t)$).

2. Method for transmitting a data stream in a multi-carrier transmission signal according to claim 1, **characterised in that** the number of interleaved code words assigned in each case to each transmission data channel (0,1,...,$N$-1) by multiplexing of the data stream with interleaved code words ($d''[i]$) multiplied with the length of the individual interleaved code word corresponds to the number of code words used in each case in the interleaving of the data stream of code words ($d''[i]$).

3. Method for transmitting a data stream in a multi-carrier transmission signal according to claim 1 or 2, **characterised in that**
   the modulation of the interleaved code words of the data stream with interleaved code words ($d''[i]$) assigned in each case to the respective transmission data channel (0,1,...,$N$-1) on a sub-carrier associated with the respective transmission data channel (0,1,...,$N$-1) is carried out with a specific modulation method for the respective transmission data channel (0,1,...,$N$-1).

4. Method for transmitting a data stream in a multi-carrier transmission signal according to one of claims 1 to 3, **characterised in that**
   the coding of the data stream ($d[i]$) is an outer coding of the data stream ($d[i]$) and after the demultiplexing an inner coding of the interleaved code words of the data stream with interleaved code words ($d_0''[i],d_1''[i],...,d_{N-1}''[i]$) assigned in each case to the respective transmission data channel (0,1,...,$N$-1) is carried out with a specific inner coding method for the respective transmission data channel (0,1,...,$N$-1).

5. Method for receiving a data stream transmitted in a multi-carrier transmission signal which was transmitted with a method according to claims 1 to 4, in a receiver with the following method steps:

   • Demodulation of the received multi-carrier transmission signal ($r(t)$) in at least one data stream with interleaved code words ($\tilde{d}_0''[i],\tilde{d}_1''[i],...,\tilde{d}_{P-1}''[i]$) transmitted in a respective sub-carrier signal ($r_0(t),r_1(t),...,r_{P-1}(t)$) of the received multi-carrier transmission signal ($r(t)$) in a receiving data channel (0,1,...,$P$-1) in each case and equalisation of the respective demodulated data stream ($\tilde{d}_0'[i],\tilde{d}_1'[i],...,\tilde{d}_{P-1}'[i]$) in the respective receiving data channel,

wherein the minimum number of the receiving data channels (0,1,...,$P$-1) in which the data streams with interleaved code words transmitted in each case in the individual sub-carrier signals ($r_0(t),r_1(t),...,r_{P-1}(t)$) of the received multi-carrier transmission signal ($r(t)$) are in each case demodulated and equalised, depends on the signal processing capacity of the respective receiver, and

• De-interleaving and decoding corresponding to the coding of all the data streams ($\tilde{d}_0''[i],\tilde{d}_1''[i],...,\tilde{d}_{P-1}''[i]$) of the received multi-carrier transmission signal ($r(t)$) in each case demodulated and equalised in the individual receiving channels.

**6.** Method for receiving a data stream transmitted in a multi-carrier transmission signal according to claim 5, **characterised in that**

after the demodulation of the data stream with interleaved code words transmitted in each case in the respective sub-carrier signal ($r_0(t),r_1(t),...,r_{P-1}(t)$) of the multi-carrier transmission signal ($r(t)$), the signal level of the data stream ($\tilde{d}_0'[i],\tilde{d}_1'[i],...,\tilde{d}_{P-1}'[i]$) demodulated in the respective receiving data channel is compared with a reference signal level and only the data stream ($\tilde{d}_0'[i],\tilde{d}_1'[i],...,\tilde{d}_{P-1}'[i]$) demodulated in the respective receiving data channel that has a signal level greater than the reference signal level is equalised and decoded.

**7.** Method for receiving a data stream transmitted in a multi-carrier transmission signal according to claim 5 or 6, **characterised in that**

the decoding of all the data streams ($\tilde{d}_0''[i],\tilde{d}_1''[i],...,\tilde{d}_{P-1}''[i]$) in each case demodulated and equalised in the individual receiving channels is an outer decoding of all the data streams ($\tilde{d}_0''[i],\tilde{d}_1''[i],...,\tilde{d}_{P-1}''[i]$) in each case demodulated and equalised in the individual receiving data channels and after the demodulation an inner decoding corresponding to an inner coding of the data stream with interleaved code words ($\tilde{d}_0'[i],\tilde{d}_1'[i],...,\tilde{d}_{P-1}'[i]$) in each case demodulated in the respective receiving data channel is carried out.

**8.** Method for receiving a data stream transmitted in a multi-carrier transmission signal according to one of claims 5 to 7, **characterised in that**

all the receivers depending on a coordination process taking place between all the receivers in each case demodulate and equalise an identical number of data streams with interleaved code words transmitted in each case in individual sub-carrier signals ($r_0(t),r_1(t),...,r_{P-1}(t)$) of the multi-carrier transmission signal ($r(t)$) in an identical number of receiving data channels.

**9.** Device for transmitting a data stream ($d[i]$) in a multi-carrier transmission signal ($s(t)$) to a plurality of receivers for implementing a method according to one of claims 1 to 4, with an encoder (1; 1') for coding the data stream ($d[i]$) in a data stream of code words ($d'[i]$) with a code rate which is less than or equal to a value which is produced by inversion of a smallest number of sub-carrier signals ($s_0(t),s_1(t),...,s_{N-1}(t)$) of the multi-carrier transmission signal ($s(t)$) that can be processed in each case in each receiver,

an interleaver (2) for interleaving of data units of the data stream of code words ($d'[i]$) in a data stream with interleaved code words ($d''[i]$),

a demultiplexer (3) for demultiplexing of the data stream with interleaved code words ($d''[i]$) on individual transmission data channels (0,1,...,$N$-1) corresponding to the individual sub-carrier signals ($s_0(t),s_1(t),...,s_{N-1}(t)$) of the multi-carrier transmission signal ($s(t)$), a modulator ($4_0,4_1,...,4_{N-1}$) for modulation of the data stream with interleaved code words ($d_0''[i],d_1''[i],...,d_{N-1}''[i]$) assigned in each case to the respective transmission data channel (0,1,...,$N$-1) on a sub-carrier signal ($s_0(t),s_1(t),...,s_{N-1}(t)$) of the multi-carrier transmission signal ($s(t)$) associated with the respective transmission data channel (0,1,...,$N$-1) and an adder (5) for adding together all the sub-carrier signals ($s_0(t),s_1(t),...,s_{N-1}(t)$) to form the multi-carrier transmission signal ($s(t)$).

**10.** Device for transmitting a data stream in a multi-carrier transmission signal according to claim 9, **characterised in that** the encoder (1; 1') is an outer encoder (1') and switched after the demultiplexer (3) there is an inner encoder ($15_0,15_1,...,15_{N-1}$) for inner coding of the data stream with interleaved code words ($d_0''[i],d_1''[i],...,d_{N-1}''[i]$) assigned in each case to the respective transmission data channel (0,1,...,$N$-1) with a specific inner coding method for the respective transmission data channel (0,1,...,$N$-1).

**11.** Device for receiving a data stream transmitted in a multi-carrier transmission signal, for implementing a method according to one of claims 5 to 8, with a demodulator ($17_0,17_1,...,17_{P-1}$) in each case connected serially in at least one receiving data channel for demodulation of the received multi-carrier transmission signal ($r(t)$) in at least one data stream ($\tilde{d}_0'[i],\tilde{d}_1'[i],...,\tilde{d}_{P-1}'[i]$) transmitted in a respective sub-carrier signal ($r_0(t),r_1(t),...,r_{P-1}(t)$) of the received multi-carrier transmission signal ($r(t)$),

an equaliser ($18_0,18_1,...,18_{P-1}$) for equalisation of the demodulated data stream ($\tilde{d}_0'[i],\tilde{d}_1'[i],...,\tilde{d}_{P-1}'[i]$) and with a de-interleaver (19; 19') connected after all the receiving data channels for de-interleaving of the data streams ($\tilde{d}_0'[i], \tilde{d}_1'[i], ..., \tilde{d}_{P-1}'[i]$) demodulated in the individual receiving data channels, and

a decoder (20; 20', $32_0, 32_1, ..., 32_{P-1}$) corresponding to the encoder (1; 1') on the transmission side for decoding of the de-interleaved data stream ($\tilde{d}'''[i]$), wherein the number of the receiving data channels in which the data streams with interleaved code words transmitted in each case in the individual sub-carrier signals ($r_0(t), r_1(t), ..., r_{P-1}(t)$) of the multi-carrier transmission signal ($r(t)$) are in each case demodulated and equalised, depends on the signal processing capacity of the respective receiver.

**12.** Device for receiving a data stream in a receiver of a multi-carrier transmission system according to claim 11, **characterised in that**

connected in each receiving data channel after the demodulator ($17_0, 17_1, ..., 17_{P-1}$) there is in each case a comparator ($33_0, 33_1, ..., 33_{P-1}$ for comparing the signal level of the data stream ($\tilde{d}_0'[i], \tilde{d}_1'[i], ..., \tilde{d}_{P-1}'[i]$) demodulated in the respective receiving data channel with a reference signal and in each case a switch ($34_0, 34_1, ..., 34_{P-1}$) for switching through the demodulated data stream ($\tilde{d}_0'[i], \tilde{d}_1'[i], ..., \tilde{d}_{P-1}'[i]$) to the de-interleaver (19; 19') and decoder (20; 20') in the case of the signal level of the demodulated data stream ($\tilde{d}_0'[i], \tilde{d}_1'[i], ..., \tilde{d}_{P-1}'[i]$) being greater than the reference signal level.

**13.** Device for receiving a data stream in a receiver of a multi-carrier transmission system according to claim 11 or 12, **characterised in that**

the decoder (20; 20') is an outer decoder (20') and connected in each receiving data channel after the demodulator ($17_0, 17_1, ..., 17_{P-1}$) there is an inner decoder ($32_0, 32_1, ..., 32_{P-1}$) corresponding to the inner encoder ($15_0, 15_1, ..., 15_{N-1}$) for inner decoding of the demodulated data stream ($\tilde{d}_0'[i], \tilde{d}_1'[i], ..., \tilde{d}_{P-1}'[i]$).

## Revendications

**1.** Procédé d'émission d'un flux de données dans un signal de transmission à porteuses multiples d'un émetteur à plusieurs récepteurs, comprenant les étapes de procédé suivantes :

- le codage du flux de données (d[i]) dans un flux de données de mots de code (d'[i]) à un taux de codage qui est inférieur ou égal à une valeur découlant d'une inversion du plus petit nombre de signaux de sous-porteuse ($s_0(t), s_1(t), ..., s_{N-1}(t)$) pouvant être respectivement traités dans chaque récepteur, du système de transmission à porteuses multiples (s(t)),
- l'entrelacement d'unités de données d'au moins un mot de code du flux de données de mots de code (d'[i]) dans un flux de données comprenant des mots de code (d"[i]) entrelacés,
- le démultiplexage du flux de données comprenant les mots de code (d"[i]) entrelacés sur différents canaux de données d'émission correspondant aux différentes sous-porteuses du signal de transmission à porteuses multiples (s(t)),
- la modulation des mots de code entrelacés, respectivement alloués au canal de données d'émission respectif, du flux de données comprenant les mots de code ($d_0"[i]), d_1"[i], ..., d_{N-1}"[i]$) sur un signal de sous-porteuse ($s_0(t), s_1(t), ..., s_{N-1}(t)$) faisant partie du canal de données d'émission (0,1,...,N-1) respectif et
- la réunion de tous les signaux de sous-porteuse ($s_0(t), s_1(t), ..., s_{N-1}(t)$) aux mots de code entrelacés, respectivement alloués au canal de données d'émission (0,1,...,N-1) respectif, du flux de données comprenant les mots de code ($d_0"[i]), d_1"[i], ..., d_{N-1}"[i]$) entrelacés de manière à obtenir un signal de transmission à porteuses multiples (s(t)).

**2.** Procédé d'émission d'un flux de données dans un signal de transmission à porteuses multiples selon la revendication 1,
**caractérisé**
**en ce que** le nombre de mots de code entrelacés respectivement alloués à chaque canal de données d'émission (0,1,...,N-1) par démultiplexage du flux de données comprenant les mots de code (d"[i]) entrelacés, multiplié par la longueur du mot de code entrelacé individuel, correspond au nombre de mots de code respectivement utilisés lors de l'entrelacement du flux de données de mots de code (d"[i]).

**3.** Procédé d'émission d'un flux de données dans un signal de transmission à porteuses multiples selon la revendication 1 ou 2,
**caractérisé**
**en ce que** la modulation des mots de code entrelacés, respectivement alloués au canal de données d'émission (0,1,...,N-1) respectif, du flux de données comprenant les mots de code (d"[i]) entrelacés, sur une sous-porteuse associée au canal de données d'émission (0,1,...,N-1) respectif s'effectue au moyen d'un procédé de modulation spécifique au canal de données d'émission (0,1,...,N-1) respectif.

4. Procédé d'émission d'un flux de données dans un signal de transmission à porteuses multiples selon l'une quelconque des revendications 1 à 3,
**caractérisé**
**en ce que** le codage du flux de données (d[i]) est un codage extérieur du flux de données (d[i]) et, après le démultiplexage, un codage intérieur des mots de code entrelacés, respectivement alloués au canal de données d'émission (0,1,...,N-1) respectif, du flux de données comprenant les mots de code ($d_0''[i]$),$d_1''[i]$,...,$d_{N-1}''[i]$) entrelacés, s'effectue au moyen d'un procédé de codage intérieur spécifique au canal de données d'émission (0,1,...,N-1) respectif.

5. Procédé de réception d'un flux de données transmis dans un signal de transmission à porteuses multiples, qui a été émis au moyen d'un procédé selon les revendications 1 à 4, dans un récepteur, comprenant les étapes de procédé suivantes :

   • la démodulation du signal de transmission à porteuses multiples (r(t)) reçu dans au moins un flux de données, transmis dans un signal de sous-porteuse ($r_0(t),r_1(t),...,r_{p-1}(t)$) respectif du signal de transmission à porteuses multiples (r(t)) reçu, comprenant les mots de code ($\tilde{d}_0'[i],\tilde{d}_1'[i],...,\tilde{d}_{p-1}'[i]$) entrelacés dans respectivement un canal de données de réception (0,1,...,P-1) et l'égalisation du flux de données ($\tilde{d}_0'[i],\tilde{d}_1'[i],...,\tilde{d}_{p-1}'[i]$) démodulé respectif dans le canal de données de réception respectif,
   dans lequel le nombre minimal de canaux de données de réception (0,1,...,P-1), dans lesquels les flux de données, respectivement transmis dans les différents signaux de sous-porteuse ($r_0(t),r_1(t),...,r_{p-1}(t)$) du signal de transmission à porteuses multiples (r(t)) reçu et comprenant les mots de code entrelacés, sont respectivement démodulés et égalisés, dépend de la capacité de traitement des signaux du récepteur respectif, et
   • le désentrelacement et le décodage, correspondant au codage, de tous les flux de données ($\tilde{d}_0''[i],\tilde{d}_1''[i],...,\tilde{d}_{p-1}''[i]$), respectivement démodulés et égalisés dans les différents canaux de réception, du signal de transmission à porteuses multiples (r(t)) reçu.

6. Procédé de réception d'un flux de données transmis dans un signal de transmission à porteuses multiples selon la revendication 5,
**caractérisé**
**en ce que**, après la démodulation du flux de données, respectivement transmis dans le signal de sous-porteuse ($r_0(t),r_1(t),...,r_{p-1}(t)$) respectif du signal de transmission à porteuses multiples (r(t)) et comprenant les mots de code entrelacés, le niveau de signal du flux de données ($\tilde{d}_0'[i],\tilde{d}_1'[i],...,\tilde{d}_{p-1}'[i]$) démodulé dans le canal de données de réception respectif est comparé à un niveau de signal de référence et seul le flux de données ($\tilde{d}_0'[i],\tilde{d}_1'[i],...,\tilde{d}_{p-1}'[i]$) démodulé dans le canal de données de réception respectif dont le niveau de signal de référence est supérieur au niveau de signal de référence est égalisé et décodé.

7. Procédé de réception d'un flux de données transmis dans un signal de transmission à porteuses multiples selon la revendication 5 ou 6,
**caractérisé**
**en ce que** le décodage de tous les flux de données ($\tilde{d}_0''[i],\tilde{d}_1''[i],...,\tilde{d}_{p-1}''[i]$) respectivement démodulés et égalisés dans les différents canaux de réception est un décodage extérieur de tous les flux de données ($\tilde{d}_0''[i],\tilde{d}_1''[i],...,\tilde{d}_{p-1}''[i]$) respectivement démodulés et égalisés dans les différents canaux de données de réception et, après le démodulage, un décodage intérieur, correspondant à un codage intérieur, du flux de données respectivement démodulé dans le canal de données de réception respectif comprenant les mots de code ($\tilde{d}_0'[i],\tilde{d}_1'[i],\cdots,\tilde{d}_{p-1}'[i]$) entrelacés est effectué.

8. Procédé de réception d'un flux de données transmis dans un signal de transmission à porteuses multiples selon l'une quelconque des revendications 5 à 7,
**caractérisé**
**en ce que** tous les récepteurs démodulent et égalisent respectivement un nombre identique de flux de données, respectivement transmis dans différents signaux de sous-porteuse ($r_0(t),r_1(t),...,r_{p-1}(t)$) du signal de transmission à porteuses multiples (r(t)) et comprenant les mots de code entrelacés, en un nombre identique de canaux de données de réception en fonction d'un processus de coordination ayant lieu entre tous les récepteurs.

9. Dispositif d'émission d'un flux de données (d[i]) dans un signal de transmission à porteuses multiples (s(t)) vers plusieurs récepteurs, pour la mise en oeuvre d'un procédé selon l'une quelconque des revendications 1 à 4, comprenant un codeur (1 ; 1') pour le codage du flux de données (d[i]) dans un flux de données de mots de code (d'[i]) à un taux de codage qui est inférieur ou égal à une valeur découlant d'une inversion du plus petit nombre de signaux de sous-porteuse $(s_0(t),s_1(t),...,S_{N-1}(t))$ pouvant être traités dans chaque récepteur, du système de transmission à porteuses multiples $(s(t))$, un entrelaceur (2) pour l'entrelacement d'unités de données du flux de données de mots de code $(d'[i])$ dans un flux de données comprenant des mots de code $(d''[i])$ entrelacés, un démultiplexeur (3) pour le démultiplexage du flux de données comprenant les mots de code $(d''[i])$ entrelacés sur différents canaux de données d'émission $(0,1,...,N-1)$ correspondant aux différents signaux de sous-porteuse $(s_0(t),s_1(t),...,s_{N-1}(t))$ du signal de transmission à porteuses multiples $(s(t))$, un modulateur $(4_0,4_1,...,4_{N-1})$ pour la modulation du flux de données $(0,1,...,N-1)$, respectivement alloué au canal de données d'émission respectif, comprenant les mots de code $(d_0''[i]),d_1''[i],...,d_{N-1}''[i])$ entrelacés sur un signal de sous-porteuse $(s_0(t),s_1(t),...,s_{N-1}(t))$, faisant partie du canal de données d'émission $(0,1,...,N-1)$ respectif, du signal de transmission à porteuses multiples $(s(t))$ et un additionneur (5) pour la réunion de tous les signaux de sous-porteuse $(s_0(t),s_1(t),...,s_{N-1}(t))$ de manière à obtenir le signal de transmission à porteuses multiples $(s(t))$.

**10.** Dispositif d'émission d'un flux de données dans un signal de transmission à porteuses multiples selon la revendication 9,
**caractérisé**
**en ce que** le codeur (1 ; 1') est un codeur extérieur (1') et un codeur intérieur $(15_0,15_1,...,15_{N-1})$ permettant le codage intérieur du flux de données, respectivement alloué au canal de données d'émission $(0,1,...,N-1)$ respectif et comprenant les mots de code $(d_0''[i]),d_1''[i],...,d_{N-1}''[i])$ entrelacés, au moyen d'un procédé de codage intérieur spécifique au canal de données d'émission $(0,1,...,N-1)$ respectif, est monté en aval du démultiplexeur (3).

**11.** Dispositif de réception d'un flux de données transmis dans un signal de transmission à porteuses multiples, pour la mise en oeuvre d'un procédé selon l'une quelconque des revendications 5 à 8, comprenant
un démodulateur $(17_0,17_1,...,17_{P-1})$ monté respectivement en série dans au moins un canal de données de réception pour la démodulation du signal de transmission à porteuses multiples $(r(t))$ dans au moins un flux de données $(\tilde{d}_0'[i],\tilde{d}_1'[i],\cdots,\tilde{d}_{p-1}'[i])$ transmis dans un signal de sous-porteuse $(r_0(t),r_1(t),...,r_{p-1}(t))$ respectif du signal de transmission à porteuses multiples $(r(t))$ reçu,
un égaliseur $(18_0,18_1,...,18_{P-1})$ pour l'égalisation du flux de données $(\tilde{d}_0'[i],\tilde{d}_1'[i],\cdots,\tilde{d}_{p-1}'[i])$ démodulé et un désentrelaceur (19 ; 19') monté en aval de tous les canaux de données de réception pour le désentrelacement des flux de données $(\tilde{d}_0'[i],\tilde{d}_1'[i],\cdots,\tilde{d}_{p-1}'[i])$ démodulés dans les différents canaux de données de réception et
un décodeur $(20 ; 20', 32_0,32_1,...,32_{P-1})$, correspondant au codeur (1 ; 1') côté émission, pour le décodage du flux de données $(d'''[i])$ désentrelacé, dans lequel le nombre de canaux de données de réception, dans lesquels les flux de données, respectivement transmis dans les différents signaux de sous-porteuse $(r_0(t),r_1(t),...,r_{p-1}(t))$ du signal de transmission à porteuses multiples $(r(t))$ reçu et comprenant les mots de code entrelacés, sont respectivement démodulés et égalisés, dépend de la capacité de traitement des signaux du récepteur respectif.

**12.** Dispositif de réception d'un flux de données dans un récepteur d'un système de transmission à porteuses multiples selon la revendication 11,
**caractérisé**
**en ce que** respectivement un comparateur $(33_0,33_1,...,33_{P-1})$ permettant de comparer le niveau de signal du flux de données $(\tilde{d}_0'[i],\tilde{d}_1'[i],\cdots,\tilde{d}_{p-1}'[i])$ démodulé dans le canal de données de réception respectif à un signal de référence, et respectivement un commutateur $(34_0,34_1,...,34_{P-1})$ permettant de transférer le flux de données $(\tilde{d}_0'[i],\tilde{d}_1'[i],\cdots,\tilde{d}_{p-1}'[i])$ démodulé au désentrelaceur (19 ; 19') et au décodeur (20 ; 20'), lorsque le niveau de signal du flux de données $(\tilde{d}_0'[i],\tilde{d}_1'[i],\cdots,\tilde{d}_{p-1}'[i])$ démodulé est supérieur au niveau de signal de référence, sont montés en aval du démodulateur $(17_0,17_1,...,17_{P-1})$ dans chaque canal de données de réception.

**13.** Dispositif de réception d'un flux de données dans un récepteur d'un système de transmission à porteuses multiples selon la revendication 11 ou 12,
**caractérisé**
**en ce que** le décodeur (20 ; 20') est un décodeur extérieur (20') et un décodeur intérieur $(32_0,32_1,32_{P-1})$, correspondant au codeur intérieur $(15_0,15_1,...,15_{N-1})$ et permettant le décodage intérieur du flux de données $(\tilde{d}_0'[i],\tilde{d}_1'[i],\cdots,\tilde{d}_{p-1}'[i])$ démodulé, est monté en aval du démodulateur $(17_0,17_1,...,17_{P-1})$ dans chaque canal de données de réception.

Fig. 1A

Fig. 1B

EP 2 136 523 B1

$d[i]$ — 1' — äußerer Kanal-Kodierer — $d'[i]$ — 2' — äußerer Verschachtler — $d''[i]$ — 3

$d_0''[i]$ — $15_0$ innerer Kanal-Kodierer 0 — $16_0$ innerer Verschachtler 0 — $4_0$ Subträger-Modulator 0 — $s_0(t)$

$d_1''[i]$ — $15_1$ innerer Kanal-Kodierer 1 — $16_1$ innerer Ver-schachtler 1 — $4_1$ Subträger-Modulator 1 — $s_1(t)$

$d_{N-1}''[i]$ — $15_{N-1}$ innerer Kanal-Kodierer N-1 — $16_{N-1}$ innerer Ver-schachtler N-1 — $4_{N-1}$ Subträger-Modulator N-1 — $s_{N-1}(t)$

5 — $s(t)$

Fig. 1C

Fig. 2A

Fig. 2B

EP 2 136 523 B1

Fig. 2C

EP 2 136 523 B1

Fig. 2D

```
                    ┌─────────┐
                    │  Start  │
                    └─────────┘
                         │
                         ▼
        ┌───────────────────────────────────────┐
        │  äußeres Kanal Kodieren des zu sendenden │───S10
        │            Datenstroms                  │
        └───────────────────────────────────────┘
                         │
                         ▼
        ┌───────────────────────────────────────┐
        │   äußeres Verschachteln des Kodierten    │───S20
        │            Datenstroms                  │
        └───────────────────────────────────────┘
                         │
                         ▼
        ┌───────────────────────────────────────┐
        │  inverses Multiplexen des Kodierten Datenstroms │
        │    in eine der Anzahl N von Subträgern des      │───S30
        │ Mehrträger-Übertragungssignals entsprechenden   │
        │       Anzahl von Teildatenströmen               │
        └───────────────────────────────────────┘
                         │
                         ▼
        ┌ ─ ─ ─ ─ ─ ─ ─ ─ ─ ─ ─ ─ ─ ─ ─ ─ ─ ┐
        │    inneres Kanal Kodieren jedes einzelnen │───S40
        │            Teildatenstroms              │
        └ ─ ─ ─ ─ ─ ─ ─ ─ ─ ─ ─ ─ ─ ─ ─ ─ ─ ┘
                         │
                         ▼
        ┌ ─ ─ ─ ─ ─ ─ ─ ─ ─ ─ ─ ─ ─ ─ ─ ─ ─ ┐
        │   inneres Verschachteln jedes einzelnen  │───S50
        │            Teildatenstroms              │
        └ ─ ─ ─ ─ ─ ─ ─ ─ ─ ─ ─ ─ ─ ─ ─ ─ ─ ┘
                         │
                         ▼
        ┌───────────────────────────────────────┐
        │ Modulieren jedes Teildatenstroms auf einen zugehörigen │
        │ Subträger des Mehrträger-Übertragungssignals und       │───S60
        │ zusammenfügen der einzelnen Subträger zu einem         │
        │        Mehrträger-Übertragungssignal                   │
        └───────────────────────────────────────┘
                         │
                         ▼
                    ┌─────────┐
                    │  Ende   │
                    └─────────┘
```

Fig. 3

Start

Demodulieren jedes Teildatenstroms vom jeweiligen
Subträger des Mehrträger-Übertragungssignal — S100

Vergleichen des Signalpegels jedes Teildatenstroms
mit einem Referenzsignalpegel — S110

Weiterschalten derjenigen Teildatenströme,
deren Signalpegel größer als ein
Referenzsignalpegel ist — S120

inneres Entschachteln der weitergeschalteten Teildatenströme — S130

inneres Dekodieren der weitergeschalteten
Teildatenströme — S140

Signal entzerren der demodulierten
Teildatenströme — S150

äußeres Entschachteln der entzerrten Teildatenströme
zu einem entschachtelten Gesamt-Datenstrom — S160

äußeres Kanaldekodieren des entschachtelten
Gesamt-Datenstroms — S170

Ende

# Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9843373 A1
- US 2001050926 A1